# EUROPÄISCHE PATENTSCHRIFT

(11) **EP 3 801 128 B1**
(45) Veröffentlichungstag und Bekanntmachung des Hinweises auf die Patenterteilung: **19.11.2025**
(21) Anmeldenummer: 19729668.4
(22) Anmeldetag: 31.05.2019
(51) Int. Cl.: A47B 3/06, A47B 47/04, A47B 87/00, A47B 96/20, E04B 2/74, F16B 12/24

(54) **SYSTEM ZUM AUFBAU EINES MÖBELS**
METHOD FOR CONSTRUCTING A PIECE OF FURNITURE
SYSTÈME POUR CONSTRUIRE UN MEUBLE

(30) Priorität: 01.06.2018 DE 102018208676
(43) Veröffentlichungstag der Anmeldung: 14.04.2021
(73) Patentinhaber: MAAGER, Frank, 79295 Sulzburg (DE)
(72) Erfinder: MAAGER, Frank, 79295 Sulzburg (DE)
(74) Vertreter: RPK Patenanwälte Reinhardt und Kaufmann Partnerschaft mbB (Pforzheim)
(86) Internationale Anmeldenummer: PCT/EP2019/064205
(87) Internationale Veröffentlichungsnummer: WO 2019/229244

(56) Entgegenhaltungen:
- EP-A1- 0 367 857
- WO-A1-2012/095454
- WO-A1-2018/195212
- CN-U- 207 349 213
- DE-A1- 10 342 994
- DE-T2- 69 918 676
- DE-U1- 202011 102 717
- FR-A- 1 327 143
- FR-A1- 3 056 652

## Beschreibung

Die Erfindung betrifft ein System zum Aufbau eines Möbels oder eines Messestands nach dem Oberbegriff des Anspruches 1.

Im Rahmen dieser Erfindung wird unter dem Begriff "Tragstruktur" eine Struktur verstanden, die dazu bestimmt und geeignet ist, eine tragendes Element eines Möbels oder eines Messestands zu sein. Die Tragstruktur ist flächig ausgebildet oder umgibt eine Fläche zumindest teilweise und hat mehrere seitliche Kanten mit Schnittstellen zur Verbindung mit weiteren Systemkomponenten. Die Tragstruktur kann auch als Gestell ausgebildet sein, auf dem weitere Elemente wie zum Beispiel eine Tischplatte angeordnet sein können.

Im Rahmen dieser Erfindung wird unter dem Begriff "Schnittstelle" eine Komponente verstanden, die als gesondertes Element in Aussparungen einer Tragstruktur angeordnet ist. Damit bilden die Schnittstellen Anbindungspunkte für beliebige Elemente und Anschlüsse als auch für Zubehör. An den Schnittstellen werden zur Befestigung dieser Elemente und Anschlüsse sowie des Zubehörs Gegenstücke befestigt, die mit den Schnittstellen in Wirkverbindung treten.

Im Rahmen dieser Erfindung wird unter dem Begriff "Stellelement" ein Element verstanden, über das die Tragstruktur z.B. am Untergrund abgestützt oder das auch wenigstens eine weitere Tragstruktur oder andere Elemente angeschlossen werden können. Die Stellelemente können mit den entsprechenden Gegenstücken an den Schnittstellen angebracht werden und damit im Raum eine beliebige Position erhalten. Vorzugsweise ist das Stellelement ein Bein zum Aufstellen der Tragstruktur.

Im Stand der Technik sind verschiedenste Systeme zum Aufbau von Möbeln wie insbesondere Tischen, Schränken, Regalen und dergleichen, aber auch zum Aufbau von Messeständen bekannt, wobei üblicherweise eine Tragstruktur wie eine Tischplatte, ein Regalbrett, eine Liege- oder Sitzfläche mit entsprechenden die Tragstruktur auf dem Untergrund abstützenden Stellelementen wie z.B. Tischbeinen verbunden wird. Diese Verbindung erfolgt üblicherweise so, dass die Stellelemente an der Unterseite der Tragstruktur befestigt werden. Durch die Befestigung in der Fläche der Tragstruktur wird damit dem Möbel die Möglichkeit genommen, die Tragstruktur auch anderweitig einzusetzen, insbesondere lässt sich die Tragstruktur dadurch nicht beidseitig verwenden.

Aus der dem Oberbegriff der unabhängigen Ansprüche zugrunde liegenden DE 103 42 994 A1 sind Verbindungselemente bekannt, die zum Verbinden von plattenförmigen Aufstellelementen plattenförmige Aufstellelemente zur Herstellung einer temporären Wand verwendet werden.. Die Aufstellelemente werden auf das Verbindungselement aufgesetzt, um unter Ausbildung einer nach Absatz [0007] lösbaren, gelenkigen und drehsteifen Verbindung Aufstellelemente scharnierartig zu verbinden. Drehsteif bedeutet, dass eine drehsteife Lagerung wie eine Türangel an einem Aufstellelement erzeugt wird, während das andere Aufstellelement demgegenüber drehbeweglich daran gelagert wird.

Aus der DE 20 2011 102 717 U1 ist ein Tischmöbel bekannt, bei dem Aufbau, Tischverlängerung, Tischverbindung und die beidseitige Benutzbarkeit einer Tischplatte in einem einheitlich modularen konstruktiven Stecksystem integriert werden. Dazu weisen die Eckpunkte der Tischplatte zylinderförmige Ausnehmungen mit daran anschließend kantenbegleitenden Ausklinkungen auf, an denen kantenbegleitend und damit auf den Kanten stirnseitig jeweils zwei Verankerungsschienen aus Flachmaterial befestigt sind. Die Ausklinkungen greifen in die Plattenoberflächen ein.

Aus der DE 295 17 113 U1 ist ein Tisch mit einem Rahmen bekannt, der aus miteinander verbundenen Rahmenprofilen aufgebaut ist. Der Rahmen weist an den Rahmenprofilen an beliebigen, frei wählbaren Stellen anbringbare Tischbeine und wahlweise Verbinder für andere Tische und/oder Schreibtischzubehör auf. Auf den Rahmenprofilen liegt eine Tischplatte auf. Das Rahmenprofil weist einen rechteckigen Querschnitt und eine umlaufende Nut zur Befestigung von Tischbeinen und Zubehör auf.

Die DE 19 46 626 A zeigt einen Tisch, der aus zwei an den Schmalseiten angeordneten Böcken und einer dazwischen eingespannten U-förmigen Tischplatte besteht, die an ihren Längsrändern mit einer abgewinkelten Zarge versehen ist, wobei Verspannungsglieder an den Stirnenden der Platte sowie zusätzlich an den Zargen angeordnet und von der Unterseite der Platte und der Innenseite der Zarge aus anspannbar sind. Die Tischplatte bildet ein U und kann nicht gewendet werden

Der FR 1 327 143 A ist eine übliche Befestigung von Tischbeinen an einer Tischplatte mittels Flügelmuttern zu entnehmen, die entlang einer Schiene verschieblich sind.

Aus der DE 198 03 103 A1 ist ein variables Tischgestell mit einer Dreh-Wende-Tischplatte bekannt, unter der sich in Bohrungen oder Aufnahmen beliebige Füße anbringen lassen, die in der Längsachse drehbar sind. Auf diesen Montageflächen lassen sich dann quadratische Platten auf beliebige Art und Weise anordnen. Diese Platten haben an den vertikalen Stoßkanten der Dreh-Wendeplatten Öffnungen, Löcher oder sonstige Ausnehmungen, um dort andere Platten anzuschließen, um dadurch entsprechende großflächige Oberflächen als Verbundplatten zu bilden.

Die DE 10 2010 042 973 A1 offenbart eine Verbindungsvorrichtung zum Verbinden von Möbelbauteilen, welche Beschläge und Hülsen aufweist. Die Beschläge sind zum Befestigen an den Möbelbauteilen ausgebildet. Die Hülse weist einen Halteabschnitt auf, der durch ein Verdrehen der Hülse in Bezug auf das Möbelbauteil um eine Längsachse der Hülse mit Haltemitteln des dritten Möbelbauteils in Eingriff bringbar ist. Der erste und der zweite Beschlag weisen jeweils einen Verbindungsabschnitt auf, und die Verbindungsabschnitte sind von einer Stirnseite der Hülse aus in einen Innenraum der Hülse einsetzbar. Das Tischbein wird an einem geteilten Tisch-Verbinder montiert. Auflageprofile für die aufliegende Tischplatte werden am Tischbein montiert.

Für den modularen Aufbau eines Regals mit Zubehörteilen ist es aus der US 2015/0313357 A1 bekannt, eine Wand mit einer Platte und einer Halterung zu verwenden. Die Platte hat horizontale Stangen und die Halterung hat eine erste und zweite Öffnung. die erste und zweite Öffnung sind dimensioniert, um mindestens eine der Öffnungen der horizontalen Stange aufzunehmen. Die Halterung umfasst außerdem einen Niet zur Befestigung der Wand am Regal.

Die EP 0 367 857 A1 beschreibt eine Vorrichtung zum lösbaren gelenkigen Verbinden von im Gebrauchszustand stehenden, tafelförmigen Wandelementen. Dazu werden Gelenkhülsen in die vertikal nach unten zeigenden Stirnkanten der Wandplatten eingesetzt und dadurch reine Plattenscharniere zwischen mehreren Platten gebildet. Die Verbindung ist gelenkig und kann damit nicht die Tragstruktur in einer festen Position fixieren, so dass stets mehr als nur ein plattenförmiges Element erforderlich ist.

Aus der DE 699 18 676 T2 sind aneinanderfügbare Teile eines Tisches bekannt, die über ein gesondertes Verbindungsstück miteinander zu verbinden sind. Eine Verbindung erfolgt nicht nur seitlich an den Kanten, sondern die entsprechenden Betätigungsmechanismen sind in anderen Flächen der Ober- bzw. Unterseite der Tischplatte vorgesehen. Trotz der seitlichen Schnittstelle ist ein unmittelbarer Anschluss der Tischplattenelemente nicht möglich.

Die CN 207349213 U zeigt einen reinen Plattenverbinder gegebenenfalls mit 45° geneigten Oberflächen zum Verbinden mehrerer Teilplatten zu einem Möbelstück. Wenigstens eine Deckfläche weist einen Anschnitt auf.

Die WO 2012/095454 A1 zeigt einen reinen Platten- und Korpus-Verbinder, der nach seiner Fixierung nicht mehr lösbar ist. Die Verbinder greifen in Stirn- oder Deckflächen ein und besitzen Zusatzfunktion. Sie werden lediglich eingeklickt und verbleiben dort bis zur Zerstörung der Verbindung.

Aus der FR 3 056 652 A1 sind T-Nuteinschnitte mit Einsätzen in der Platte bekannt, wobei nicht nur die Kante hierfür verwendet wird, sondern auch die daran angrenzende Oberfläche des plattenförmigen Elements. Es handelt sich um einen reinen Verbinder, wobei ein Klemmstift übersteht. Die Verbindungen sind nicht für einen permanenten Umbau konzipiert, d.h. es erfolgt ein einmaliger Zusammenbau.

Ausgehend von diesem Stand der Technik liegt der vorliegenden Erfindung die Aufgabe zugrunde, ein flexibles, modulares System mit Schnittstellen an den Kanten einer Tragstruktur zu schaffen, über die sämtliche Funktionen eines Möbels abgedeckt werden können.

Diese Aufgabe wird durch ein System zum Aufbau eines Möbels oder eines Messestandes mit den Merkmalen des Anspruches 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Unter den abzudeckenden Funktionen wird dabei der Anschluss von Stellelementen wie zum Beispiel einem Tischbein ebenso verstanden, wie der Anschluss von Zubehörelementen, Funktionselementen zum Beispiel zur Ausgestaltung einer langen Tischtafel oder auch zur Aufnahme beliebiger Träger für Elemente, die üblicherweise an, auf, unter und neben einem Möbel vorgesehen sind.

Das System weist dazu zunächst eine Tragstruktur auf, die flächig ausgebildet ist oder eine Fläche zumindest teilweise umgibt und vor allem mehrere seitliche Kanten hat. An diesen Kanten können an wenigstens zwei vorzugsweise gegenüberliegenden Kanten, insbesondere diametral gegenüberliegenden Kanten Schnittstellen vorgesehen sein, die zur Verbindung mit weiteren Systemkomponenten bestimmt und geeignet sind. Über wenigstens ein Stellelement wird die Tragstruktur am Untergrund abgestützt oder über ein derartiges Stellelement können auch wenigstens eine weitere Tragstruktur oder andere Elemente angeschlossen werden. Das Stellelement ist an den an den Kanten angeordneten Schnittstellen der wenigstens einen Tragstruktur form- und/oder kraftschlüssig befestigbar.

Die Schnittstellen sind als von der Tragstruktur gesonderte Komponenten in Aussparungen in den seitlichen Kanten der Tragstruktur angeordnet und in die Tragstruktur zumindest teilweise integriert. Das wenigstens eine Stellelement ist mit einem Gegenstück zur jeweiligen Schnittstelle an den Schnittstellen festlegbar. Damit kann ein Stellelement in der Seite einer Tragstruktur befestigt werden, wobei sich eine Tragstruktur mit seitlich angeordneten Anbindungspunkten ergibt. Diese Anbindungspunkte können für beliebige Elemente und Anschlüsse als auch Zubehör vorgesehen sein.

Dabei sind die Aussparungen zylindrisch oder langlochartig ausgebildet sind und/oder die Schnittstelle weist eine zur Aussparung kongruente Form auf und ist dazu eingerichtet, nach Einführen der Schnittstelle in die Aussparung eine formschlüssige Verbindung zwischen Schnittstelle und Tragstruktur zu erzeugen.

Die Integration der Schnittstellen eröffnet vielseitige Möglichkeiten im Hinblick auf die Materialauswahl der Tragstruktur. Dazu kann die Tischplatte zum Beispiel eine Wabenplatte sein, in die die Schnittstellen eingebaut sind. Ebenso kann als Tragstruktur eine Massivplatte zum Beispiel aus Massivholz, eine Spanplatte oder auch eine Platte aus Beton und dergleichen verwendet werden, die über seitliche Aussparungen für die Schnittstellen verfügt.

Die Schnittstellen sind so ausgestaltet, dass wenigstens ein Stellelement mit einem Gegenstück bzw. einem zur Schnittstelle gegengleichen Element in Wirkverbindung tritt. Dies erfolgt über Formschluss und/oder Kraftschluss, gegebenenfalls auch über Materialschluss, um eine zuverlässige und sichere Verbindung zu gewährleisten.

Das Gegenstück weist eine Sicherung gegen ein unbeabsichtigtes Lösen des Gegenstücks von der Schnittstelle gemäß einer der folgenden Lösungen auf:
- kraft- und formschlüssige Verbindung des Gegenstücks mit der Schnittstelle,
- kraftschlüssige Verbindung des Gegenstücks mit der Schnittstelle mittels magnetischer Kräfte,
- Eingreifen eines Sicherungselements in einen Hinterschnitt,
- Verbindung mehrerer Gegenstücke miteinander.

Zudem ist das Gegenstück gegen Verdrehen des Gegenstücks gegenüber der Schnittstelle drehsicher befestigbar. Gewährleistet wird damit die vor allem im gewerblichen Bereich erforderliche Betriebssicherheit.

Die Stellelemente können mit den entsprechenden Gegenstücken an den Schnittstellen angebracht werden und damit im Raum eine beliebige Position befestigbar. Dies hat den Vorteil, dass die Tragstruktur nur seitlich zum Anschluss weiterer Elemente als auch zur Abstützung auf dem Boden benötigt wird, das heißt die Tragstruktur selbst ist an den anderen Oberflächen beidseitig verwendbar und damit auch wendbar. Gleichzeitig werden die baulichen Voraussetzungen dafür geschaffen, sämtliche im Bereich des Möbels oder des Messestands erforderlichen Komponenten so anzukoppeln, dass die Tragstruktur selbst frei bleiben kann, also zum Beispiel als Tischfläche für einen Arbeitsplatz vollständig frei von anderen Elementen ist.

Die Tragstruktur selbst ist ein plattenförmiges Element wie zum Beispiel eine Tischplatte. Sie kann aber auch die Tragstruktur für ein plattenförmiges Element sein, sodass die eigentlich tragende Struktur z.B. als Gestell unter der Tischplatte angeordnet ist und dort die Schnittstellen zum Anschluss weiterer Komponenten aufweist, wobei in beiden Fällen das plattenförmige Element unangetastet und damit wendbar bleibt. Damit ergibt sich eine aufgeräumte und platzsparende Anordnung, die an die jeweiligen Bedürfnisse der Nutzer anpassbar, nachrüstbar als auch erweiterbar ist.

Vorzugsweise ist die Schnittstelle ein zumindest teilweise in der Aussparung angeordneter Einsatz, der als von der Tragstruktur unabhängige Komponente ganz nach Wunsch des Herstellers der Tragstruktur zugeführt werden kann. Auf diese Komponente kann dann auch das Stellelement oder das Zubehör abgestimmt werden oder auch umgekehrt kann ausgehend vom Stellelement oder vom Zubehör der passende Einsatz ausgewählt werden. Dies eröffnet eine Vielzahl von Gestaltungsmöglichkeiten.

Grundsätzlich sind Schnittstellen beliebiger Ausgestaltung als punktuelle oder lineare Schnittstellen an beliebigen Positionen an allen Kanten möglich. Neben der Wendbarkeit der Platte, da Ober- und Unterseite unangetastet bleiben, ist eine beliebige Positionierung der Stellelemente aber auch weiterer Elemente jederzeit möglich. Grundsätzlich lassen sich auch bestehende Systeme nachrüsten, sofern die Kanten zugänglich sind und dort in Aussparungen Schnittstellen platziert werden können, die z.B. als Beschläge erhältlich sind. So können zum Beispiel die Beine zum Aufstellen einer Tischplatte, Sitzfläche, Liegefläche, Abstellfläche oder Anlehnfläche nicht nur an den vier Ecken einer viereckigen Tragstruktur vorgesehen werden, sondern an beliebiger anderer Stelle, sofern eine statische Bestimmtheit der Tragstruktur gewährleistet ist.

Günstigerweise ist das wenigstens eine Stellelement quer, vorzugsweise normal zur wenigstens einen Tragstruktur befestigbar, das heißt, es kann die Tragstruktur nach unten in Richtung Boden abstützen, aber ebenso weitere Elemente in geeigneter Anordnung an der Tragstruktur befestigen. Dies ist von Vorteil, wenn neben einem Tisch auch andere Möbel mit dem System aufgebaut werden sollen. Zu denken ist an Regale, Schränke, Container, Betten, Couches oder auch andere Möbel ebenso wie auch an den Aufbau eines Messestands.

Vorteilhafterweise ist das wenigstens eine Stellelement ein Bein zum Aufstellen der wenigstens einen Tragstruktur, die vorzugsweise eine Tischplatte ist. Es ergibt sich damit eine vielseitige Gestaltungsmöglichkeit für ein und denselben Tisch, je nachdem an welcher Schnittstelle die Beine angeordnet werden. Das Stellelement kann auch als Hubsäule oder höhenverstellbares Bein, z.B. als teleskopierbares Bein ausgebildet sein, um dadurch eine Höhenverstellung umzusetzen.

Es ist von Vorteil, wenn das Stellelement gleichzeitig zur Befestigung weiterer Systemkomponenten vorgesehen werden kann, die zum Beispiel eines der Elemente umfassen, die durch eine Sitzfläche, eine Liegefläche, eine Abstellfläche, eine Anlehnfläche, ein Kopfteil, eine Armlehne, eine Rückenlehne gebildet sind. Hier sind auch beliebige weitere Elemente denkbar, sofern gewährleistet ist, dass sie über ein Stellelement an einer Schnittstelle einer Tragstruktur befestigbar sind. Dies erhöht die Modularität des Systems und damit die Vielseitigkeit für den Anwender.

Neben den Schnittstellen zur Befestigung der Stellelemente können zusätzlich oder alternativ an den Kanten auch Zusatzschnittstellen vorgesehen sein, um an den Schnittstellen und/oder an den Zusatzschnittstellen Zubehörelemente zu befestigen. Dabei ist es ein alternativer und ergänzender Vorteil, wenn die Zubehörelemente auch an den an den Schnittstellen angebrachten Stellelementen befestigbar sind, da dann eine Schnittstelle zugleich mehreren Funktionen zugeführt werden kann. Dies hat den Vorteil, dass zusätzliche Elemente, die in der Regel auf dem Tisch oder auf dem Boden stehen, mittels der seitlich angebrachten Schnittstellen an der Tragstruktur befestigt werden können. Zu denken ist insbesondere an Leuchten, Kabelkanäle, Trennwände, Akustikwände, Bildschirmhalterungen, Anbautische, Papierkörbe, Stauräume, Schubkästen, Lautsprecher, Pflanzenbehältnisse aber auch bei Arbeitstischen an sämtliche Elemente, die für den Bürobetrieb heutzutage erforderlich sind wie Telefonhalter oder auch Halter für Computer, Workstations, also CPU-Halter. Dies hat den Vorteil, dass die Tischplatte von ihrer Funktion als Abstellfläche für dauerhaft benötigte Elemente dadurch befreit wird, dass diese jetzt peripher an der Kante der Tragstruktur befestigt werden können. Ebenso kann der Boden von dort üblicherweise platzierten Elementen wie zum Beispiel dem Papierkorb befreit werden. Dadurch kann die Tischfläche fast vollständig bis zum Beispiel auf die Tastatur zum Arbeiten genutzt und damit auch leichter und schneller gereinigt werden. Gleichzeitig werden Elemente wie der Papierkorb ergonomischer zugänglich, wobei sich auch Vorteile im Hinblick auf Raumreinigung und Arbeitssicherheit durch die Vermeidung von Stolperstellen ergeben.

Die Schnittstellen können bevorzugt auch für Koppelelemente genutzt werden, die zur Ankopplung an Schnittstellen weiterer Tragstrukturen bestimmt sind. Vorteilhafterweise kann dieses Koppelelement zugleich wiederum ein Stellelement lagern, sodass bedarfsweise an der Schnittstelle auch ein Bein statt mehrerer Beine der einzelnen Tragstrukturen vorgesehen sein kann. Auch dies trägt zur Raumgestaltung und Sicherheit bei. Gleichzeitig werden damit die Möglichkeiten geschaffen, Arbeitstisch-Insel-Kombinationen, Raumteiler oder Messestände zu gestalten, da aus Einzelplatten ein Plattenverbund hergestellt werden kann.

Vorzugsweise sind die Schnittstellen für die Drehsicherung gegen Verdrehen der Schnittstelle gegenüber der Tragstruktur wahlweise auf eine oder mehrere der folgenden Arten ausgebildet:
- hinsichtlich der Aussparung exzentrische Anordnung eines Elements zur Drehsicherung,
- Anordnung mehrerer Elemente zur Drehsicherung,
- Erzeugung einer formschlüssigen, nicht drehbaren Verbindung zwischen Schnittstelle und Tragstruktur.

Durch diese Alternativen wird eine zuverlässige Verbindung zwischen Schnittstelle und Tragstruktur gewährleistet, die auch die beim Gebrauch auftretenden Kräfte sicher übertragen kann.

Es ist von Vorteil, wenn die Schnittstelle auch eine Sicherung gegen unbeabsichtigtes Lösen von der Tragstruktur aufweist. Hierfür hat sich wenigstens eine der folgenden Lösungen als hilfreich erwiesen:
- mechanisches Verbinden oder Verschrauben der Schnittstelle mit der Tragstruktur ,
- materialschlüssiges Verbinden der Schnittstelle mit der Tragstruktur,
- passives Verklemmen der Schnittstelle mit der Tragstruktur durch Anformungen,
- aktives Verklemmen der Schnittstelle mit der Tragstruktur durch manuell betätigbare Eingriffselemente.

Auch dadurch wird eine zuverlässige Verbindung zwischen Schnittstelle und Tragstruktur gewährleistet, die die beim Gebrauch auftretenden Kräfte sicher übertragen kann.

Bevorzugterweise ist an wenigstens einem Stellelement eine zwischen Stellelement und Tragstruktur angreifende Niveauregulierung für die Tragstruktur vorgesehen. Dies ist insbesondere dann von Vorteil, wenn eine Tragstruktur auf mehr als drei Stellelementen abgestützt werden soll, da dann das System eventuell statisch überbestimmt ist. Durch eine Niveauregulierung kann dem dadurch eventuell entstehenden Wackeln oder Kippen entgegengewirkt werden. Gleichzeitig kann die Tragstruktur parallel zum Boden ausgerichtet bzw. waagrecht ins Wasser gestellt werden, um z.B. Fertigungstoleranzen auszugleichen.

Vorzugsweise erfolgt die drehsichere Befestigung des Gegenstücks gegen Verdrehen des Gegenstücks gegenüber der Schnittstelle auf wenigstens eine der folgenden Arten:
- gegenüber der Schnittstelle exzentrische Anordnung eines formschlüssigen Elements,
- Anordnung mehrerer Elemente zur Drehsicherung;
- Verwendung eines Widerlagers.

Dadurch wird auch an der Verbindung zwischen Gegenstück und Schnittstelle eine gute, sichere und zuverlässige Befestigung und Kraftübertragung gewährleistet.

Erfindungsgemäß ist die Sicherung gegen ein unbeabsichtigtes Lösen des Gegenstücks von der Schnittstelle wenigstens eine der folgenden Lösungen:
- kraft- und formschlüssige Verbindung des Gegenstücks mit der Schnittstelle,
- kraftschlüssige Verbindung des Gegenstücks mit der Schnittstelle mittels magnetischer Kräfte,
- Eingreifen eines Sicherungselements in einen Hinterschnitt,
- Verbindung mehrerer Gegenstücke miteinander.

Gewährleistet wird damit die vor allem im gewerblichen Bereich erforderliche Betriebssicherheit.

Weitere Vorteile ergeben sich aus der nachfolgenden Beschreibung bevorzugter Ausführungsbeispiele sowie aus den Unteransprüchen.

### Kurzbeschreibung der Figuren

Im Folgenden wird die Erfindung anhand von in den Figuren dargestellten Ausführungsbeispielen näher erläutert. Es zeigen:
- Fig. 1a, 1b: eine Tragstruktur in Draufsicht und Seitenansicht,
- Fig. 2: eine Tragstruktur in Draufsicht mit daran angebrachten Schnittstellen in einer nicht erfindungsgemäßen Art,
- Fig. 3a, 3b: eine Tragstruktur mit daneben angeordneten Stellelementen in Draufsicht und Seitenansicht,
- Fig. 4a, 4b: eine Darstellung gemäß Fig. 3a, 3b mit an den Schnittstellen befestigten Stellelementen,
- Fig. 5a, 5b: eine Seitenansicht einer mit Stellelementen versehenen Tragstruktur vor und nach Anbringung von Zubehör,
- Fig. 6, 7: zwei als Tische mit Stellelementen ausgebildete Tragstrukturen, die über ein Koppelelement miteinander verkoppelt werden, vor und nach Kopplung durch das Koppelelement,
- Fig. 8: eine Darstellung gemäß Fig. 7 mit einem am Koppelelement angebrachten Stellelement,
- Fig. 9: einen aus einer Tragstruktur mit Stellelementen aufgebauten langen Tisch mit Statikelementen,
- Fig. 10: einen langen Tisch mit an der Tragstruktur angeordneten zusätzlichen Stellelementen,
- Fig. 11: eine Tragstruktur mit daran befestigten Zubehörteilen,
- Fig. 12a, 12b: eine Tragstruktur mit darauf angeordnetem plattenförmigem Element in einer Ansicht von unten und von der Seite,
- Fig. 13: eine Draufsicht auf eine als Verbundplatte oder Sandwichplatte ausgebildete Tragstruktur,
- Fig. 14: eine explosionsartige Darstellung der in einer Platte integrierbaren Tragstruktur mit daran integrierten Schnittstellen,
- Fig. 15a, 15b: eine Tragstruktur in Draufsicht und Seitenansicht mit einer alternativen Anbringung der Stellelemente,
- Fig. 16a-16c: eine Tragstruktur mit Hubsäulen als Stellelement,
- Fig. 17a, 17b: eine Tragstruktur mit daran angeordneten höhenverstellbaren Stellelementen,
- Fig. 18a -18c: eine Tragstruktur mit daran angeordneten alternativ geformten Stellelementen in Draufsicht, sowie einer Ansicht von zwei unterschiedlichen Seiten,
- Fig. 19: eine Seitenansicht einer Tragstruktur mit Stellelement,
- Fig. 20: eine Darstellung gemäß Fig. 19 mit einem alternativen Stellelement,
- Fig. 21: eine Darstellung gemäß Fig. 19 mit einem weiteren alternativen Stellelement,
- Fig. 22: eine Darstellung einer Tragstruktur mit in länglichen Schnittstellen angeordneten Stellelementen,
- Fig. 23: eine Seitenansicht einer Tragstruktur mit eingesteckten Stellelementen,
- Fig. 24: eine Tragstruktur in Seitenansicht mit daran angeordneten linearen Schnittstellen, an denen die Stellelemente verschiebbar festgelegt sind,
- Fig. 25: eine Seitenansicht einer Gestaltung eines Möbels mit einer Tragstruktur als Bank,
- Fig. 26: eine Seitenansicht einer Tragstruktur in einer Gestaltung als Bett,
- Fig. 27: eine Vorderansicht einer Tragstruktur in einer Gestaltung als Couch,
- Fig. 28: eine Vorderansicht einer Ausgestaltung mit Tragstrukturen in der Form eines Highboards,
- Fig. 29: eine Vorderansicht einer Ausgestaltung als Schrank,
- Fig. 30: eine Seitenansicht zwei miteinander gekoppelter Tragstrukturen mit einer Trennwand und einem mittigen Bein,
- Fig. 31: eine Seitenansicht zweiter gekoppelter Tragstrukturen mit einem in der Mitte befindlichen Kabelkanal,
- Fig. 32: eine Seitenansicht einer Tragstruktur mit daran angekoppeltem Computercontainer,
- Fig. 33a - 33d: exzentrische Anordnungen von Drehsicherungen,
- Fig. 34: unterschiedliche Ausführungsformen der Schnittstelle, um sie in den Aussparungen der Tragstruktur gegen ein Verdrehen zu sichern,
- Fig. 35a, 35b: eine formschlüssige Drehsicherung gegen ein Verdrehen der Schnittstelle gegenüber der Tragstruktur,
- Fig. 36a - 36c: eine Schnittstelle mit einer Sicherung gegen unbeabsichtigtes Lösen sowohl der Schnittstelle als auch des Gegenstücks,
- Fig. 37a, 37b: ein Ausführungsbeispiel einer Sicherung der Schnittstelle gegen unbeabsichtigtes Lösen mittels eines manuell betätigbaren Eingriffselements,
- Fig. 38a - 38c: eine Schnittstelle mit einer Niveauregulierung,
- Fig. 39a - 39e: ein weiteres Ausführungsbeispiel einer Sicherung des Gegenstücks an der Schnittstelle mittels eines Hinterschnitts,
- Fig. 40a - 40d: eine Ausgestaltung einer Schnittstelle mit einem in einen Hinterschnitt eingreifenden Drehriegel,
- Fig. 41a - 41d: eine Schnittstelle mit einem durch eine Drucktaste betätigbaren Verriegelungselement,
- Fig. 42a - 42d: ein weiteres Ausführungsbeispiel zur Festlegung und Sicherung des Gegenstücks mittels magnetischer Kräfte,
- Fig. 43a, 43b: eine Ausgestaltung einer kraftschlüssig durch magnetische Kräfte am Tragkörper gehaltenen Zusatzschnittstelle.

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

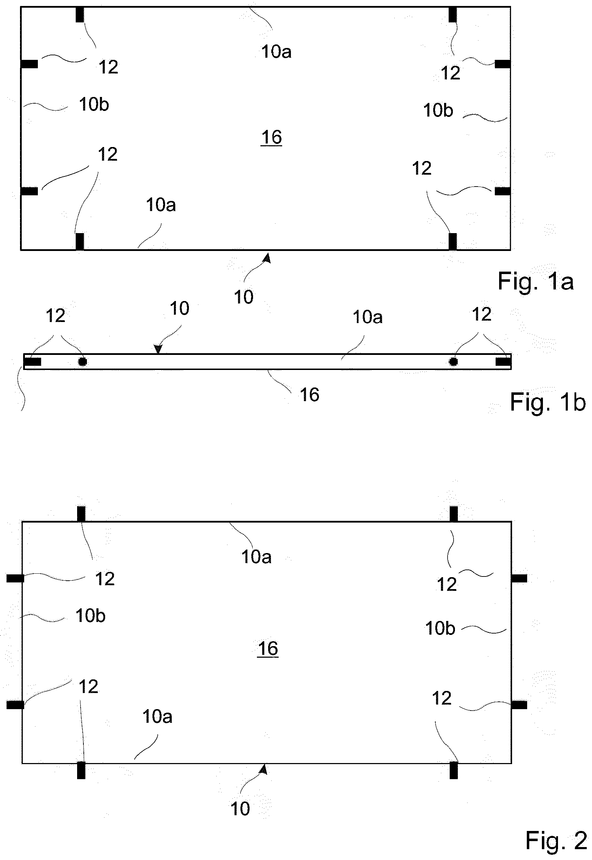

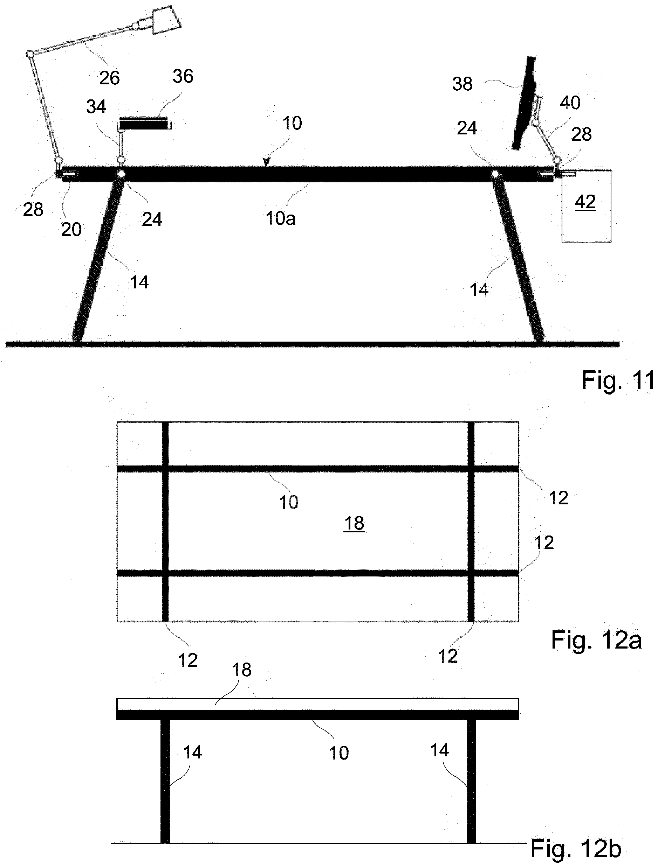

Die Figuren zeigen ein System zum Aufbau eines Möbels oder eines Messestandes mit wenigstens einer Tragstruktur 10 bzw. die Tragstruktur 10, die gemäß Fig. 1a, 1b flächig ausgebildet ist oder gemäß den Fig. 12a, 12b eine Fläche zumindest teilweise umgibt. In letzterem Fall stellt die Tragstruktur 10 sozusagen ein Gestell zur Verfügung, auf dem weitere Elemente wie zum Beispiel auch eine Tischplatte angeordnet werden können.

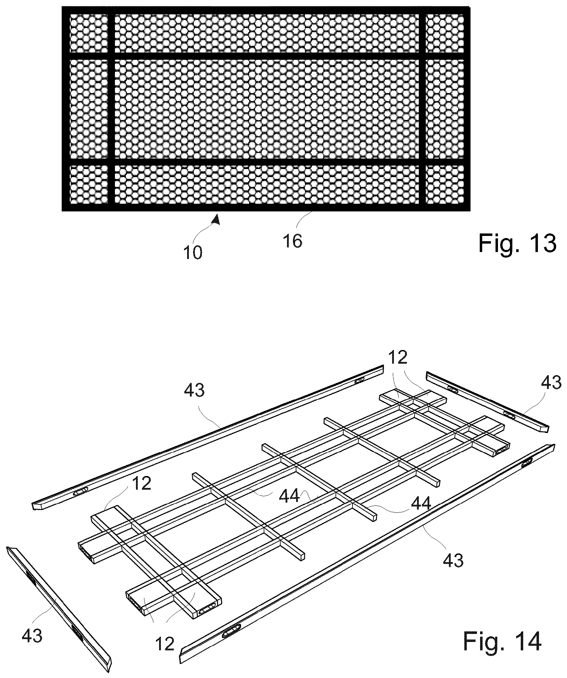

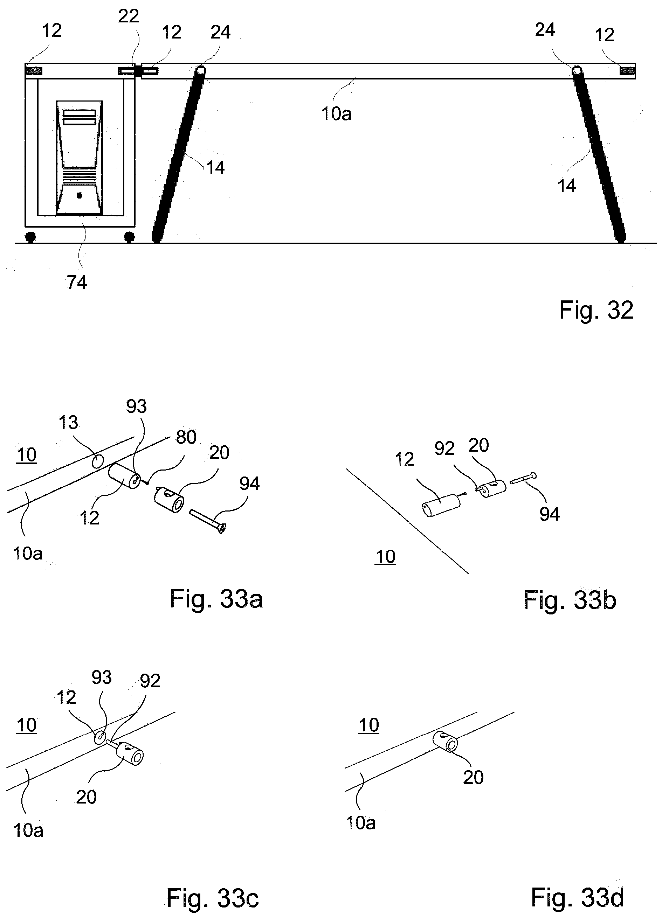

Die Tragstruktur 10 weist gemäß den Figuren und insbesondere gemäß Fig. 1a, 1b mehrere seitliche Kanten 10a, 10b auf, wobei an wenigstens zwei Kanten 10a, 10b Schnittstellen 12 vorgesehen sind, die in Aussparungen 13 - oder wie z.B. im Fall der Fig. 14 in zu den Aussparungen analogen Aufnahmen - angeordnet sind. Auf die Aussparungen 13 wird unten in den Fig. 33a bis 43b im Detail noch näher eingegangen. Die Schnittstellen 12 sind vorzugsweise an zwei gegenüberliegenden Kanten vorgesehen, können aber auch an allen Kanten 10a, 10b vorgesehen sein. Die Schnittstellen 12 dienen zur Verbindung mit weiteren Systemkomponenten. Grundsätzlich können sowohl die Form der Fläche als auch der Tragstruktur, die in den meisten Fällen zugleich ein plattenförmiges Element 16 bildet, als auch deren Kontur beliebig ausgestaltet sein, solange gewährleistet ist, dass an den die Fläche begrenzenden seitlichen Kanten 10a, 10b entsprechende Schnittstellen 12 und/oder gegebenenfalls zusätzliche Zusatzschnittstellen 20 vorgesehen sind.

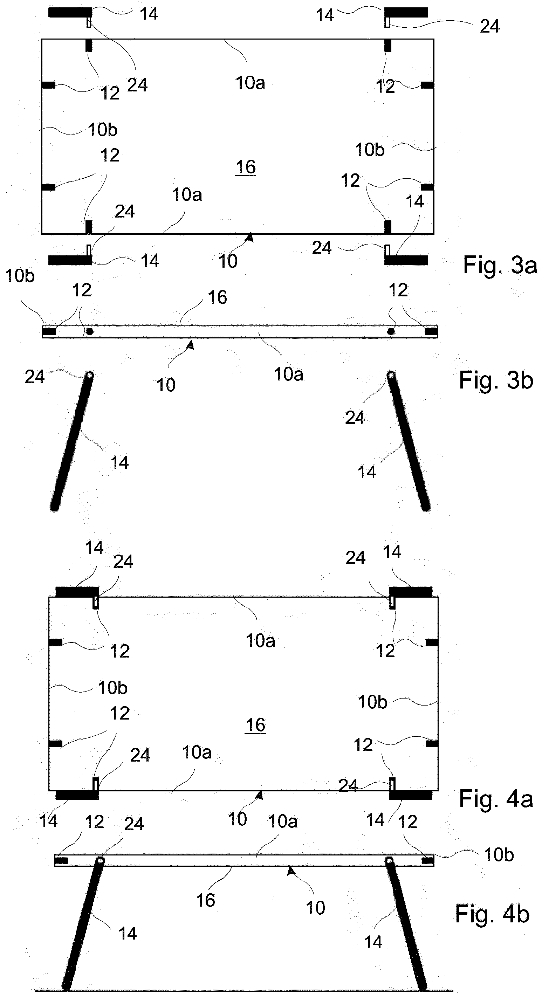

Um die Tragstruktur auf einem Untergrund abzustützen oder auch andere Systemkomponenten mit der Tragstruktur zu verbinden, ist wenigstens ein Stellelement 14, 14', 14" vorgesehen, dass an der wenigstens einen Tragstruktur 10 vorzugsweise lösbar befestigbar ist. In Fig. 3a, 3b, 4a, 4b handelt es sich bei den Stellelementen um Beine, insbesondere Tischbeine zur Abstützung der Tragstruktur. An den an den Kanten 10a, 10b vorgesehenen Schnittstellen 12 der wenigstens einen Tragstruktur 10 ist das wenigstens eine Stellelement 14, 14', 14" form- und/oder kraftschlüssig, gegebenenfalls auch materialschlüssig befestigbar.

Die in den Kanten 10a, 10b der Tragstruktur 10 angeordneten und von der Tragstruktur gesonderten Schnittstellen 12 sind in die Tragstruktur 10 zumindest teilweise integriert und vollständig integriert in den Aussparungen 13 angeordnet, die ihrerseits in den seitlichen Kanten 10a, 10b vorgesehen sind. Das wenigstens eine Stellelement 14, 14', 14" ist mit einem Gegenstück 24 zur jeweiligen Schnittstelle 12 bzw. einem ggf. zur Schnittstelle 12 gegengleichen Element an den Schnittstellen 12 festlegbar.

Vorzugsweise ist die Schnittstelle 12 ein zumindest teilweise in der Aussparung 13 angeordneter Einsatz, worauf weiter unten im Hinblick auf die Fig. 33a bis 43b noch eingegangen wird.

Dadurch kann eine seitliche Schnittstelle eine Vielzahl von Funktionen abdecken, wobei es nicht nur darum geht, das Stellelement 14, 14', 14" an der Tragstruktur 10 zu befestigen und damit z.B. eine Tischplatte über ein Tischbein abzustützen, sondern auch darum geht, über die Schnittstelle 12 die baulichen Voraussetzungen zu schaffen, beliebige Möbelteile zu positionieren, Zubehör anzubringen und die Fläche der Tragstruktur als auch das Umfeld des Möbels zu bereinigen. Der Einsatzzweck ist dabei nicht allein auf Möbel beschränkt, sondern das System kann grundsätzlich auch für andere Bereiche wie zum Beispiel den Messebau eingesetzt werden, insbesondere wenn es darum geht, Stellwände, Schränke, Tische oder dergleichen im Rahmen des Messebaus miteinander zu verbinden.

Die wenigstens eine Tragstruktur 10 wird durch ein plattenförmiges Element 16 gebildet, sie kann aber auch wie in Fig. 12a, 12b dargestellt, die bloße Tragstruktur und damit das Gestell für ein plattenförmiges Element 18 bilden. In den Figuren ist das wenigstens eine Stellelement 14, 14', 14" quer, vorzugsweise normal zur Fläche der wenigstens einen Tragstruktur 10 befestigbar.

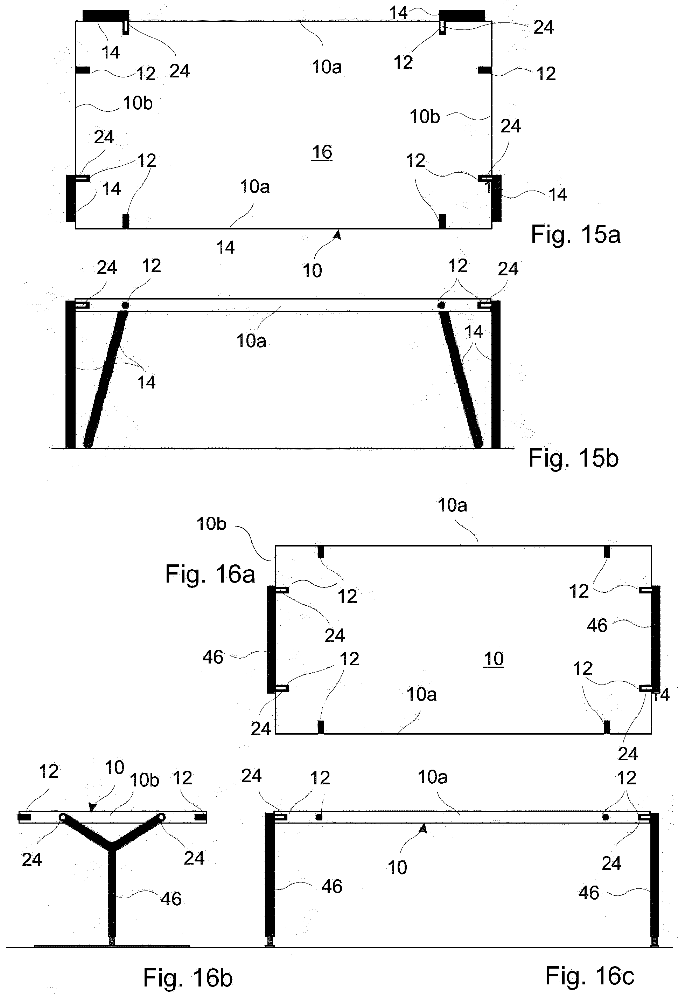

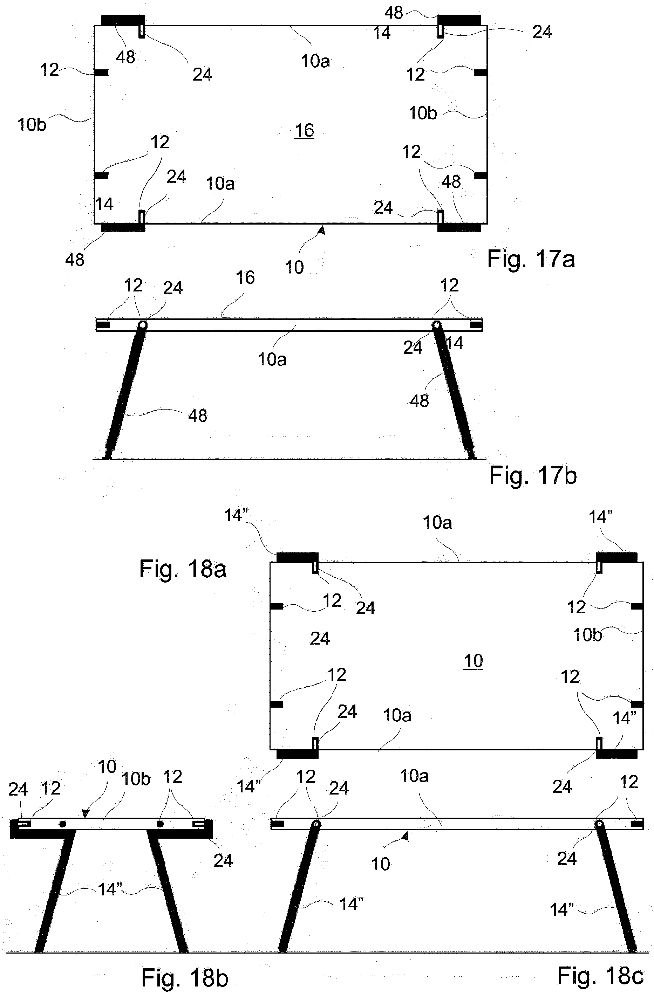

Das Stellelement 14, 14', 14" ist vorzugsweise ein Bein zum Aufstellen der wenigstens einen Tragstruktur, kann aber für eine Höhenverstellung gemäß Fig. 16a bis 16c auch eine Hubsäule 46 oder gemäß Fig. 17a, 17b ein höhenverstellbares Bein 48 sein, das im Ausführungsbeispiel als teleskopierbares Bein ausgebildet ist. Grundsätzlich sind aber auch andere Höhenverstellungen z.B. durch Gewindeverstellungen möglich.

Das wenigstens eine Stellelement 14, 14', 14" kann in einer Ausführungsform auch zur Befestigung wenigstens einer weiteren Systemkomponente vorgesehen sein, worauf weiter unten noch näher eingegangen wird. Als Systemkomponenten kommt insbesondere wenigstens eines der Elemente umfassend eine Sitzfläche, eine Liegefläche, eine Abstellfläche, eine Anlehnfläche, ein Kopfteil 60, eine Armlehne 62 oder eine Rückenlehne 58 in Betracht.

Um Zubehör an der Tragstruktur 10 zuverlässig zu befestigen, können die grundsätzlich zur Befestigung der Stellelemente 14, 14', 14" vorgesehenen Schnittstellen 12 auch für diesen Zweck verwendet werden. Alternativ oder ergänzend können zur Befestigung von Zubehör aber auch an den Kanten 10a, 10b der wenigstens einen Tragstruktur 10 zusätzliche Zusatzschnittstellen 20 vorgesehen werden. Ebenso können systemgemäß die an den Schnittstellen 12 bereits angebrachten Stellelemente 14, 14', 14" wieder Anschlussmöglichkeiten für Zubehörelemente aufweisen, sodass ein und dieselbe Schnittstelle 12 mehrfach genutzt werden kann.

Als Zubehörelemente kommen sehr viele Elemente in Betracht, was gerade für die Modularität und Vielseitigkeit des Systems spricht. Zubehörelemente können zum Beispiel wenigstens eines der folgenden Elemente sein: eine Leuchte 26, ein Kabelkanal 72, eine Trennwand oder Akustikwand 70, eine Bildschirmhalterung 40 für einen Monitor 38, ein Anbautisch, ein Papierkorb 42, eine Ablage, ein Stauraum, ein Pflanzenbehältnis, ein Statikelement 30, ein Stellteil, ein Branding-Element zur Kennzeichnung bestimmter Marken oder auch Trag- oder Halteelemente für Bürozubehör und EDV-Anlagenteile. Letztere können insbesondere Telefon-, Papierablage- oder CPU-Halter sein, die dann an wenigstens einer der Schnittstellen 12 oder der Zusatzschnittstellen 20 seitlich an der Tragstruktur 10 anbringbar sind.

Um verschiedene Tragstrukturen 10 miteinander zu koppeln, können an den Schnittstellen 12 vorzugsweise auch Koppelelemente 22 zur Ankopplung an Schnittstellen weiterer Tragstrukturen vorgesehen sein. Die Koppelelemente 22 sind so ausgebildet, dass sie mit der Schnittstelle 12 zusammenwirken, das heißt, meist handelt es sich um zur Schnittstelle 12 gegengleiche Elemente, die als Gegenstück 24 auf geeignete Weise eine kraftschlüssige, formschlüssige oder gegebenenfalls auch materialschlüssige Wirkverbindung sicherstellen.

Je nach Ausgestaltung der Tragstruktur bzw. des daran angebrachten plattenförmigen Elements 16 sind die Schnittstellen 12 vollständig und/oder die Zusatzschnittstellen 20 vorzugsweise in die Tragstruktur 10 bzw. das plattenförmige Element 16 vollständig oder teilweise durch Befestigung in den Aussparungen 13 oder in Aufnahmen wie in Fig. 14 integriert. Fig. 1a, 1b zeigen eine integrierte Lösung, wie sie zum Beispiel bei einer Verbundplatte möglich ist, die dann als plattenförmiges Element 16 verwendet wird.

Fig. 2 zeigt eine nicht erfindungsgemäße Lösung, bei der die Schnittstellen 12 am plattenförmigen Element bzw. der Tragstruktur 10 außen angeordnet sind, was insbesondere dann angebracht ist, wenn es sich bei der Tragstruktur um ein massives Element z.B. aus Massivholz, Metall, Naturstein oder Beton handelt und/oder wenn es aus gestalterischen Gründen bevorzugt ist, die Schnittstellen 12 auch äußerlich als Funktionselemente zu zeigen.

Ein wesentliches Teil des Systems ist damit die Tragstruktur 10 selbst, die dafür bestimmt und geeignet ist, mit anderen Systemkomponenten zusammen ein Möbel aufzubauen oder auch einen Messestand. Diese Tragstruktur 10 ist flächig ausgebildet und vorzugsweise umgibt zumindest teilweise oder auch vollständig eine Fläche. Sie weist mehrere seitliche Kanten 10a, 10b auf, wobei an wenigstens zwei Kanten, vorzugsweise zwei gegenüberliegenden Kanten Schnittstellen 12 vorgesehen sind, die zur Verbindung mit weiteren Systemkomponenten bestimmt und geeignet sind. Auch für die Tragstruktur 10 ist es wesentlich, dass an ihren Kanten - oder besser Kantenflächen - Schnittstellen 12 für eine Befestigung des wenigstens einen Stellelements 14, 14', 14" auf formschlüssige und/oder kraftschlüssige Weise oder auch gegebenenfalls materialschlüssige Weise vorgesehen sind.

Die Tragstruktur 10 ist durch ein plattenförmiges Element 16 gebildet.

Die Schnittstelle 12 der Tragstruktur 10 ist dazu bestimmt und geeignet, wenigstens ein Stellelement 14, 14', 14" vorzugsweise als Bein, gegebenenfalls aber auch als Anschluss- oder Koppelelement für weitere Systemkomponenten aufzunehmen. Ebenso kann die Schnittstelle 12 auch zur Ankopplung einer Hubsäule 46 oder eines höhenverstellbaren Beins 48 verwendet werden, sodass das Stellelement 14, 14', 14" dazu verwendet werden kann, die Tragstruktur aufzustellen oder zu tragen.

Wie bereits erläutert, können an den Schnittstellen 12 der Tragstruktur 10 und/oder an weiteren an den Kanten 10a, 10b vorgesehenen zusätzlichen Zusatzschnittstellen 20 weitere Elemente befestigt werden, wobei es sich vorzugsweise um die bereits oben genannten Komponenten wie zum Beispiel Sitzfläche, Armlehne oder auch weitere Zubehörelemente wie zum Beispiel Leuchten, Kabelkanäle usw. handeln kann. Ebenso kann an den Schnittstellen der Tragstruktur auch ein Trag- oder Halteelement für Bürozubehör und EDV Anlageteile angekoppelt werden.

Die Schnittstellen 12 können auch dazu verwendet werden, über Koppelelemente 22 weitere Tragstrukturen 10 mit dem Vorteil zu befestigen, dass ein Plattenverbund entsteht.

Gemäß Fig. 1b sind die Schnittstellen 12 seitlich an den Kanten 10a, 10b angebracht. Damit ergibt sich eine Tragstruktur 10 mit seitlich angeordneten Anbindungspunkten oder Anbindungsschienen. An den Schnittstellen 12 werden insbesondere Stellelemente 14, 14', 14" mit einem entsprechenden Gegenstück 24 bzw. einem gegengleichen Element angekoppelt und dadurch je nach Schnittstelle in eine beliebige Position im Raum gebracht und dort auch fixiert. Die Stellelemente 14, 14', 14" können z.B. gemäß Fig. 1a bis 4b Beine zum Aufstellen einer Tischplatte sein, sie können aber ebenso Hubsäulen 46 oder höhenverstellbare, z.B. teleskopierbare Beine 48 zur Höhenverstellung der Tragstruktur 10 sein. Ebenso lassen sich die Stellelemente 14, 14', 14" zum Erzeugen von Sitzflächen, Liegeflächen oder Anlehnflächen wie z.B. Kopfteile 60, Armlehnen 62 oder Rückenlehnen 58 verwenden.

Bei der Verwendung der Tragstruktur 10 im Zusammenhang mit Regalen und Schränken können die Schnittstellen 12 zur Herstellung von Abstellflächen wie Sideboards, Lowboards und Highboards oder Regalen verwendet werden, in dem die Stellelemente 14, 14', 14" entsprechend angeordnet werden. Ebenso lassen sich durch die Schnittstellen auch Stellwände, Trennwände, Akustikwände oder Messewände, Flipcharts oder Leitsysteme und dergleichen aufbauen.

Die Schnittstellen 12 können punktuell oder linear an beliebigen Positionen an allen Kanten 10a, 10b oder auch nur an einem Teil der Kanten 10a, 10b der Tragstruktur 10 vorgesehen werden. Dies hat zur Folge, dass die Tragstruktur 10 bzw. das plattenförmige Element 16 beidseitig verwendbar ist, da Oberseite und Unterseite unangetastet bleiben. Es ergibt sich damit eine Wendeplatte.

Fig. 3a bis 4b zeigen die Anbringung von Stellelementen 14 als Beine für die Tragstruktur 10. In Fig. 3a, 3b sind die Beine 14 mit ihren zu den Schnittstellen gegengleichen Elementen zu erkennen, die sich in dieser Stellung noch nicht in den Schnittstellen 12 befinden. Demgegenüber sind in Fig. 4a, 4b die Gegenstücke 24 bzw. die gegengleichen Elemente in die Schnittstellen 12 eingeführt und dort auf geeignete Weise kraftschlüssig und/oder formschlüssig gegebenenfalls auch materialschlüssig festgelegt. Deutlich ist zu erkennen, dass lediglich ein seitlicher Eingriff in die Kanten 10a, 10b des Tragkörpers 10 erfolgt. Die Stellelemente 14 sind dabei in Fig. 4a schräg angeordnet, sie können aber auch ohne Schrägstellung angebracht werden.

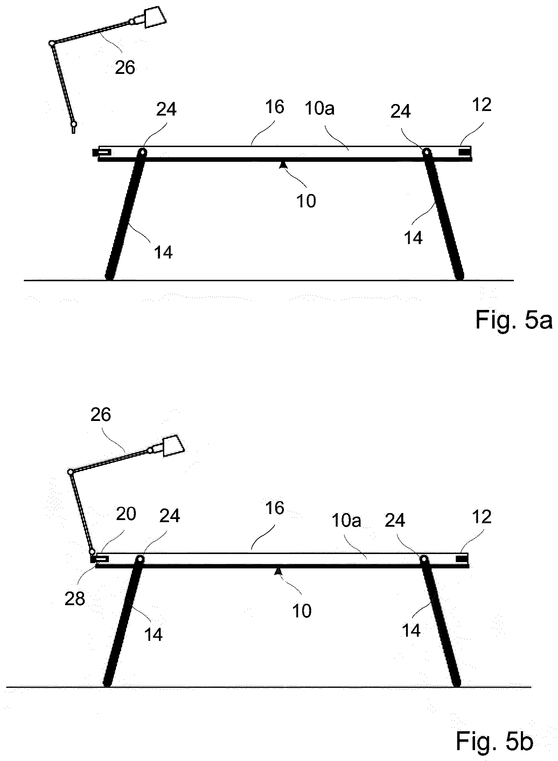

Die Schnittstellen 12 und/oder an den Kanten 10a, 10b gegebenenfalls vorgesehene zusätzliche Zusatzschnittstellen 20 können vorzugsweise auch zur Anbringung von Zubehör genutzt werden. Dies ist in Fig. 5a gezeigt, wobei dort in der Zusatzschnittstelle 20 bereits ein Anschlusselement 28 angebracht ist. An diesem Anschlusselement 28 kann dann gemäß Fig. 5b zum Beispiel eine Leuchte 26 angebracht werden. Auch hier erfolgt der Anschluss an der Seitenkante, das heißt, die Oberseite des plattenförmigen Elements 16 bleibt frei und kann anderweitig genutzt werden. Beispiele für derartiges Zubehör sind neben der Leuchte 26, Kabelkanäle 72, Trennwände, Bildschirmhalterungen 40 für Monitore 38, Anbautische, Papierkörbe, Ablagen, Stauraum, Schubästen, Lautsprecher, Pflanzenbehältnisse.

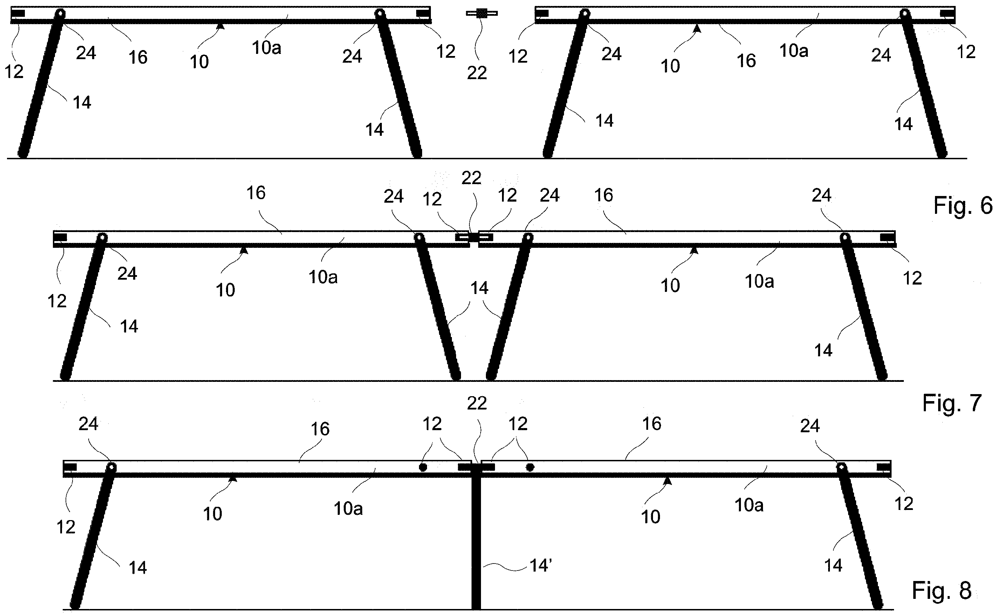

Fig. 6 und 7 zeigen eine weitere vorteilhafte Ausgestaltung des modularen Systems. In Fig. 6 sind zwei unabhängige Tragstrukturen mit zugeordneten Stellelementen 14 vorgesehen, wobei zwischen den beiden Tragstrukturen ein Koppelelement 22 angeordnet ist. In Fig. 7 ist dieses Koppelelement in den Schnittstellen 22 der Tragstrukturen 10 festgelegt, sodass sich jetzt ein Verbund der beiden Tragstrukturen ergibt. In Fig. 7 wurden die mittleren Stellelemente 14 unverändert belassen, die Stellelemente 14 lassen sich aber auch entfernen, so dass stattdessen am Koppelelement 22 ein Stellelement 14' angebracht werden kann, um dadurch eine schlankere Ausgestaltung mit weniger Beinen zu erhalten. Bevorzugter Einsatzbereich für derartige Anwendungen sind Arbeitstisch-Insel-Kombinationen, Raumteiler, Messestände und dergleichen.

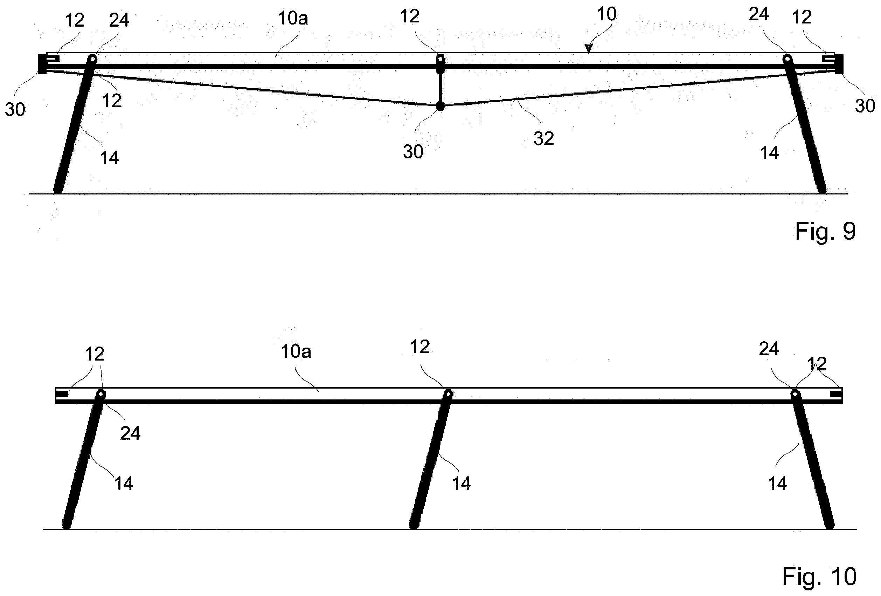

Für die Gestaltung eines langen Tischs können die Schnittstellen 12 gemäß Fig. 9 genutzt werden, um Statikelemente 30 vorzusehen, die einer Durchbiegung des Tisches entgegenwirken. In Fig. 9 wird dazu ein Seil 32 gespannt, um die Momentenlinie der Tragstruktur 10 zu verbessern. Gemäß Fig. 10 kann aber ebenso an einer z.B. mittigen Schnittstelle 12 ein weiteres Stellelement 14 vorgesehen werden.

Im Stand der Technik besteht regelmäßig das Problem, dass die Fläche der Tragstruktur 10 vielfach belegt ist. Handelt es sich z.B. um eine Tischplatte, ist diese häufig als Abstellfläche durch dauerhaft benötigte Elemente wie zum Beispiel Leuchten, Monitore, Scanner oder Ablagen besetzt. Können diese gemäß Fig.11 nun an seitlichen Kanten 10a, 10b der Tragstruktur 10 angebracht werden, wird die Tischplatte frei. Dasselbe gilt grundsätzlich auch für das Umfeld der Tragstruktur 10, da dort ständig benötigte Elemente wie z.B. der Papierkorb nun seitlich an den Kanten der Tragstruktur 10 angeordnet werden kann und gleichzeitig auch noch ergonomischer zugänglich ist. Dadurch wird die Raumreinigung erleichtert und die Arbeitssicherheit durch Vermeidung von Stolperstellen gesteigert.

Fig. 11 zeigt neben der Leuchte 26 einen Halter 34 für ein Telefon 36, einen Bildschirmhalter 40 für einen Monitor 38 und die Anbringung eines Papierkorbs 42.

Die Tragstruktur 10 selbst kann auf unterschiedliche Art und Weise ausgestaltet sein. Fig. 12a, 12b zeigen die Ausgestaltung der Tragstruktur als Gestell 10, an deren in den Figuren nicht erkennbaren seitlichen Schnittstellen 12 die Stellelemente 14 angebracht sind. Fig. 12a zeigt deutlich die tragende Struktur, auf der dann das plattenförmige Element 18 angeordnet ist. Damit befinden sich die Schnittstellen seitlich an einer Unterkonstruktion mit darauf aufliegender Platte. Die Schnittstellen 12 sind vorzugsweise außenseitig an der Tragstruktur 10 im Bereich des Rands des plattenförmigen Elements 18 vorgesehen.

Gemäß Fig. 13, 14 kann die Tragstruktur 10 aber auch so ausgestaltet sein, dass sie als plattenförmiges Element 16 in Form einer Schichtplatte zum Beispiel aus Holzwerkstoffen wie Multiplex- oder Dreischichtplatten oder aus einem Materialmix verschiedener Werkstoffe wie Metall, Kunststoff, Schaum usw. hergestellt ist. Die Schnittstellen 12 sind grundsätzlich an allen Kanten 10a, 10b einer Platte beliebig positionierbar, wobei sich im Fall einer Sandwichplatte ein Aufbau gemäß Fig. 14 anbietet. Dort sind in der Platte Aussteifungen 44 angeordnet, an denen auch die Schnittstellen 12 z.B. in Aufnahmen integriert sind. Das Ganze wird umschlossen von Rahmenelementen 43. Die so gebildete Struktur kann von der Ober- und Unterseite her mit entsprechenden Deckschichten abgedeckt werden. Dies ergibt einen Sandwich-Verbund-Leichtbau-Aufbau mit darin eingesetzten Schnittstellen 12.

Es ist jedoch ebenso denkbar, die Tragstruktur 10 bzw. das plattenförmige Element massiv auszugestalten zum Beispiel aus Massivholz, Kunststoff und Verbundstoff, Metallwerkstoffen oder auch Mineralwerkstoffen wie Beton. Lassen sich in diesem Fall die Schnittstellen 12 nicht ohne weiteres integrieren, können diese auch gemäß Fig. 2 an den Kanten nachträglich angebracht werden. Ohnehin besteht die Möglichkeit bestehende Tragstrukturen 10 mit derartigen Schnittstellen 12 nachzurüsten.

Fig. 15a, 15b zeigen die möglichen Gestaltungsmöglichkeiten. Stellelemente 14 sind grundsätzlich an sämtlichen Schnittstellen 12 ankoppelbar. Im Ausführungsbeispiel der Fig. 15a, 15b sind die vorderen Stellelemente 14 vertikal stehend außenseitig angeordnet, während die hinteren Stellelemente weiter innen stehend angeordnet sind. Dies schafft Raum, um zum Beispiel Bodencontainer unter einem Tisch problemlos unterbringen zu können.

Die Ausführungsform gemäß Fig. 16a bis 16c zeigt in Draufsicht sowie in beiden Seitenansichten die Anbringung einer Hubsäule 46 an den Schnittstellen 12. Dazu greifen gegengleiche Elemente der Hubsäule 46 in die Schnittstellen 12 ein und können dort fixiert werden. Damit ist eine Möglichkeit für eine Höhenverstellung geschaffen.

Eine andere Möglichkeit einer Höhenverstellung ist im Ausführungsbeispiel der Fig. 17a, 17b gezeigt. Dort werden mit Gegenstücken 24 bzw. gegengleichen Elementen höhenverstellbare Beine 48 an den Schnittstellen 12 angebracht, sodass, wie an der Ausdünnung der im Ausführungsbeispiel teleskopierbaren Beine im unteren Bereich zu erkennen, diese ausgefahren werden können, um eine Höhenverstellung zu erreichen. Andere Arten der Höhenverstellung sind jedoch ebenso einsetzbar.

Grundsätzlich sind beliebige Strukturen für die Stellelemente denkbar, wobei Fig. 18a bis 18c eine Möglichkeit zeigen, in der die Stellelemente 14" zwar außenseitig mit ihren Gegenstücken 24 in den Schnittstellen 12 fixiert sind, dann jedoch unter die Tragstruktur 10 zurückspringen, bevor sie sich nach unten in Richtung Boden erstrecken. Es versteht sich von selbst, dass die Beine auf unterschiedlichste Art und Weise hergestellt und ausgestaltet werden können einschließlich einer beliebigen Materialwahl.

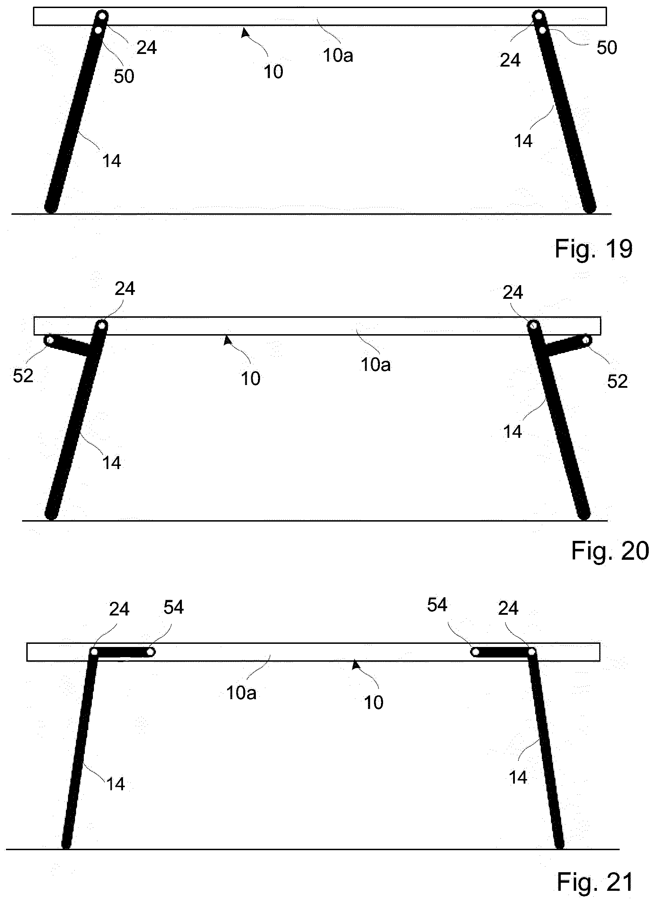

Fig. 19 bis 24 zeigen unterschiedliche Prinzipien, wie Stellelemente 14 an den Schnittstellen 12 fixiert werden können. Fig. 19 zeigt eine Ausführungsform, bei der das Stellelement 14 neben dem Gegenstück 24 zum Eingriff in die Schnittstelle 12 einen zusätzlichen Haltepunkt 50 aufweist, der unter der Tragstruktur 10 zu liegen kommt. Eine werkzeuglose, selbsttragende Klemmverbindung entsteht, indem die Stellelemente 14 nach außen gedreht werden.

Eine vergleichbare Lösung zeigt Fig. 20, wobei dort an einem weiteren Arm des Stellelements 14 ein zusätzlicher Haltepunkt 52 angeordnet ist. Auch dort erfolgt eine werkzeuglose Klemmverbindung durch Drehen des Stellelements 14 unter der Tragstruktur 10 nach außen, die dann selbsttragend ist.

Fig. 21 zeigt eine Ausführungsform, die verdeutlicht, dass die Schnittstellen 12 durchaus unterschiedlich gestaltet werden können. Dort sind die Schnittstellen 12 Langlöcher, das heißt, die Schnittstellen 12 können punktuell oder linear ausgestaltet sein. In diesem Fall wird das Stellelement 14 an zwei Punkten über die Schnittstellen12 mit der Tragstruktur verbunden, wobei das weitere Halteelement 54 in die Tragstruktur ebenso eingreift wie das Gegenstück 24. Auch diese Stellelemente können noch werkzeuglos befestigt werden.

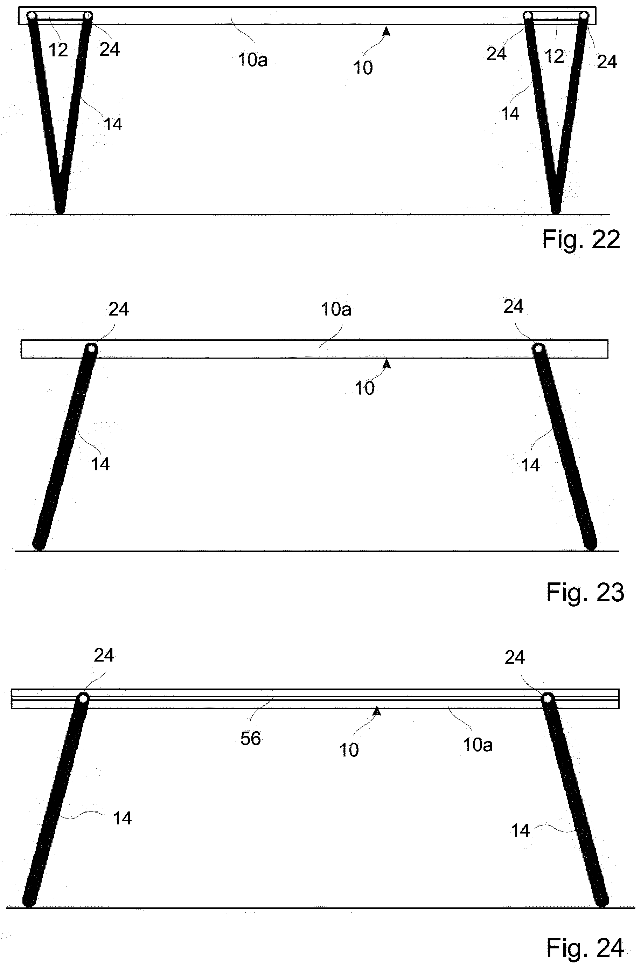

Fig. 22 zeigt eine Ausführungsform, bei der die Beine ebenfalls werkzeuglos befestigt, vorzugsweise durch Aufspreizen fixiert werden. Im zeichnerisch nicht dargestellten Ausgangszustand ist der Abstand der oberen Enden der Stellelemente 14 größer als im in Fig. 22 angebrachten Zustand. Dadurch erfolgt eine Klemmverbindung durch Aufspreizen längs der Tragstruktur 10.

In Fig. 24 ist die Schnittstelle durch eine Schiene 56 gebildet, entlang der das Stellelement 14 verschieblich festlegbar ist. Sobald das Stellelement nach außen gedreht wird, entsteht ein Form- und Kraftschluss.

In teilweise zeichnerisch nicht dargestellter Weise können die Schnittstellen 12 auf unterschiedliche Art und Weise ausgestaltet werden, indem entweder plattenseitig oder elementseitig aufeinander abgestimmte Schnittstellen 12 und gegengleiche Elemente ausgebildet werden. Alles, was im Folgenden im Hinblick auf die Festlegung des Stellelements 14 erläutert wird, gilt ebenso für die Festlegung der Zubehörteile und der weiteren Systemkomponenten.

So ist es denkbar, eine Hülse als Schnittstelle 12 am plattenförmigen Element 16 durch Schrauben zu fixieren und in dieser Hülse dann das Stellelement 14 durch Verdrehen zu sichern.

Ebenso lässt sich eine Drehsicherung dadurch erreichen, dass ein Formschluss sichergestellt wird, in dem zum Beispiel die Schnittstelle 12 nicht rund, sondern oval ausgestaltet wird. Andere Formen sind ebenso möglich.

Weitere Ausführungsformen können exzentrische Drehsicherungen enthalten, die zum Beispiel in eine Verriegelungsposition rotiert werden, während sie in der anderen Position eine Einführung der Gegenstücke 24 gestatten.

Eine Abstützung der Systemelemente kann wie in Fig. 19, 20 dargestellt auch über Widerlager erfolgen, sodass die Schnittstelle 12 selbst und das Gegenstück 24 mit geringerem Aufwand hergestellt werden können. Um eine Sicherung gegen ein unerwünschtes Herausbewegen der Stellelemente zu erreichen, sind zusätzliche Verriegelungen vorgesehen, die das Gegenstück 24 gegen ein Herausrutschen aus der Schnittstelle 12 sichern.

Grundsätzlich kann gemäß Fig. 21 ein Stellelement 14 auch mehrere Schnittstellen belegen, das heißt, diese sind miteinander über das Stellelement 14 verbunden. Dabei können entweder zwei unabhängige Gegenstücke 24 in zwei verschiedene Schnittstellen 12 eingefügt werden oder es kann ein Block in eine größere Aufnahme eingeführt werden, die eine Schnittstelle darstellt.

Eine weitere Sicherungsmöglichkeit besteht durch die Verwendung von Magneten, die zum Beispiel am Grund der Schnittstellen 12 vorgesehen sein können, oder es ist ebenso möglich, translatorisch oder rotatorisch Verriegelungselemente der Schnittstelle 12 mit dem Gegenstück 24 in Eingriff zu bringen. Grundsätzlich besteht immer die Möglichkeit, das Stellelement auf bekannte Weise mit der Schnittstelle 12 z.B. durch Verschrauben zu verbinden. Innerhalb der Tragstruktur 10 oder des plattenförmigen Elements können auch durch die Platte hindurch geführte Kopplungen zur gegenüberliegenden Seite erfolgen, um dadurch eine Fixierung zu gewährleisten. Solch eine Fixierung ist ebenso unterhalb der Tragstruktur denkbar.

Um Zubehör anzubringen, kann dieses entweder an der Schnittstelle 12 oder an einer Zusatzschnittstelle 20 angebracht werden, es ist jedoch ebenso möglich das Stellelement 14, 14', 14" so auszugestalten, dass eine Anbringung am Stellelement möglich ist.

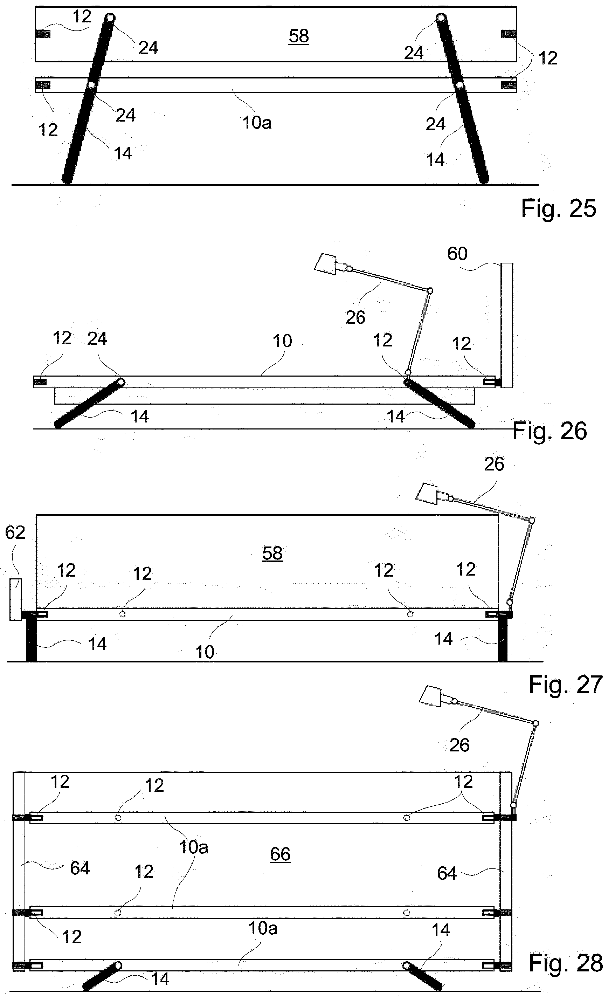

Grundsätzlich kann das System auch für weitere Anwendungen als Möbel oder Messestand eingesetzt werden. So zeigt Fig. 25 die Ausgestaltung einer Bank mit einer Rückenlehne 58, die ebenfalls entsprechende Schnittstellen 12 aufweist und am Stellelement 14 befestigt ist. Fig. 26 zeigt die Ausgestaltung eines Betts, wobei an der Schnittstelle 12 für das Stellelement 14 eine Leuchte 26 angeordnet ist und stirnseitig an der Schnittstelle 12 ein Kopfteil 60 anbringbar ist.

Fig. 27 zeigt die Ausgestaltung eines Sofas, wobei auf der Tragstruktur 10 die Rückenlehne 58 angeordnet ist. Seitlich kann am Stellelement 14 eine Armlehne 42 vorgesehen werden, während auf der gegenüberliegenden rechten Seite an der Schnittstelle 12 neben dem Stellelement 14 eine Leuchte 26 anbringbar ist.

Fig. 28 zeigt eine Ausgestaltung eines Regals, wobei auf den Stellelementen 14 mehrere übereinander liegende Tragstrukturen 10 vorgesehen sind, die an ihren Außenseiten Schnittstellen 12 zur Ankopplung von Seitenwänden 64 aufweisen. Auf der rechten Seite ist zudem an der Schnittstelle 12 eine Leuchte 26 angekoppelt.

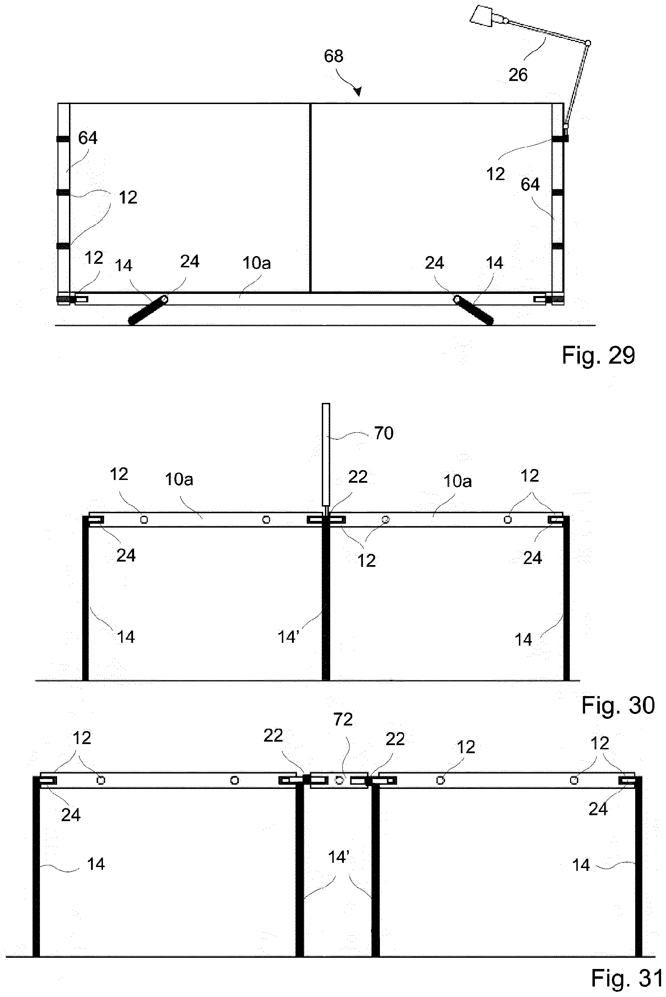

Fig. 29 zeigt eine Ausgestaltung eines Schranks mit an der Tragstruktur 10 einerseits befestigten Stellelementen 14, andererseits außenseitig angeordneten Seitenwänden 64. Am Schrank 68 ist zudem an der Schnittstelle 12 rechts oben eine Leuchte 26 angebracht.

Fig. 30 zeigt eine Ausführungsform bei der an zwei Tragstrukturen 10 außenseitig Stellelemente 14 mit ihren Gegenstücken 24 an der Schnittstelle 12 angebracht sind. Die beiden Elemente sind mittig über ein Koppelelement 22 miteinander gekoppelt, an dem ein Stellelement 14' befestigt ist. Am Koppelelement 22 ragt eine Trennwand 70 nach oben, die die beiden dadurch gebildeten Arbeitsflächen voneinander trennt.

Fig. 31 zeigt die Anordnung eines Kabelkanals 72 zwischen zwei Tragstrukturen 10. Verwendet werden dabei die Koppelelemente 22, um in der Mitte den Kabelkanal 72 zu befestigen. An den Koppelelementen 22 sind auch mittig zwei Stellelemente 14' vorgesehen.

Fig. 32 zeigt die Anbringung eines Containers, der als CPU-Halter 74 ausgestattet ist. Dieser Container wird ebenfalls über das Koppelelement 22 an einer Schnittstelle 12 der Tragstruktur 10 befestigt, die ihrerseits über Stellelemente 14 auf dem Boden abgestellt ist.

Die Fig. 33a bis 43b zeigen verschiedene Ausgestaltungen der Schnittstellen 12 im Hinblick auf ihre Anordnung in den Aussparungen 13 der Tragstruktur 10 als auch die Anordnung und Sicherung der Gegenstücke 24 gegenüber den Schnittstellen 12.

Fig. 33a bis 33d zeigen eine gegenüber einer Mittelachse der zylindrischen Schnittstelle 12 exzentrische Anordnung einer Drehsicherung 80, die aus einem Element wie einer Schraube besteht und damit die Schnittstelle 12 in axialer Richtung an der Tragstruktur 10 fixiert. Durch exzentrische Anordnung ist die Schnittstelle 12 gleichzeitig gegen Verdrehen gegenüber der Tragstruktur 10 gesichert. In Fig. 33a ist zu erkennen, dass die Schnittstelle 12 auf die zylindrische Aussparung 13 in der Kante 10a des Tragkörpers abgestimmt ist. Die Schnittstelle weist gemäß Fig. 31a eine exzentrische Bohrung 93 auf, an deren Ende eine im Durchmesser gegenüber der Bohrung 93 kleinere Durchgangsöffnung vorgesehen ist, durch die die Drehsicherung 80 am Tragkörper die Schnittstelle 12 gegen Verdrehen sichern kann. An der in Fig. 33c im Tragkörper 10 integrierten Schnittstelle 12 wird in diesem Ausführungsbeispiel eine Zusatzschnittstelle 20 befestigt, wobei die Befestigung durch eine Drehsicherung 92 erfolgt, die ebenfalls exzentrisch angeordnet ist. Die Drehsicherung ist dabei gemäß Fig. 33b ein exzentrisch an der Zusatzschnittstelle angeordneter Zapfen, der gemäß Fig. 33b bei der Befestigung der Zusatzschnittstelle formschlüssig in die Bohrung 93 eingeführt wird. Mit der als Schraube ausgebildeten Sicherung 94 gegen Lösen wird die Zusatzschnittstelle 20 dann an der Schnittstelle fixiert, so dass sich im montierten Zustand eine Darstellung gemäß Fig. 33d ergibt.

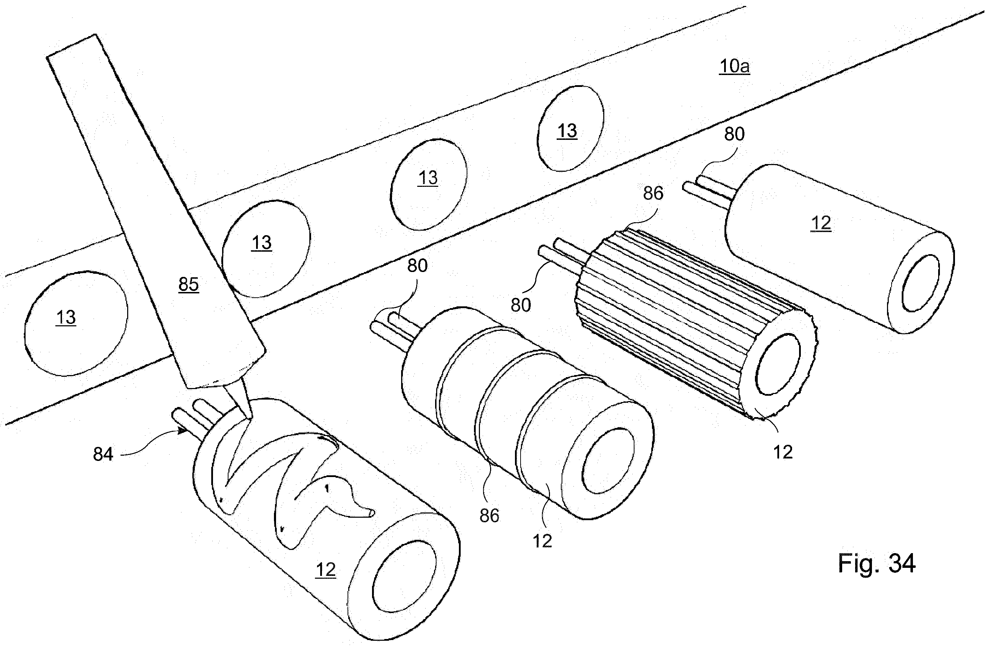

Fig. 34 zeigt unterschiedliche Ausführungsformen, um die Schnittstelle 12 in den Aussparungen 13 der Tragstruktur 10 gegen ein Verdrehen zu sichern. In diesem Fall sind die Schnittstellen 12 zylindrisch und auch die Aussparungen 13 in der Tragstruktur 10 sind durch zylindrische Bohrungen gebildet. Die Schnittstellen 12 weisen an ihrem auf die Aussparungen 13 zu zeigenden Ende Drehsicherungen 80 auf, die im Ausführungsbeispiel durch mehrere Elemente gesichert sind, sodass die Schnittstellen 12 nach Eingriff in die Tragstruktur 10 bereits dadurch gegen ein Verdrehen der Schnittstelle 12 gegenüber der Tragstruktur 10 gesichert sind.

Gleichzeitig soll aber auch eine Sicherung 84 gegen ein unbeabsichtigtes Lösen der Schnittstelle 12 von der Tragstruktur 10 gewährleistet sein. Dies kann zunächst durch mechanisches Verbinden oder Verschrauben der Schnittstelle 12 mit der Tragstruktur 10 erfolgen, wie dies im in Fig. 34 rechten Ausführungsbeispiel gezeigt ist. Dort werden die Drehsicherungen 80 zum Beispiel als Schrauben ausgebildet.

Denkbar ist ebenso ein aktives Verklemmen der Schnittstelle 12 mit der Tragstruktur 10 durch Anformungen 86. Bei den Anformungen 86 kann es sich um Querrippen oder Längsrippen handeln, wie in den beiden mittleren Ausführungsformen in Fig. 34 dargestellt. Werden die Schnittstellen 12 in die Aussparungen 13 gepresst, kommen die Anformungen 86 an der Wandung der Aussparung 13 zum Anliegen, wodurch eine entsprechende Sicherung gegen ein unbeabsichtigtes Lösen erreicht werden kann. Ebenso kann eine materialschlüssige Verbindung wie in der linken Darstellung in Fig. 34 gezeigt dadurch erfolgen, dass auf den Umfang der Schnittstelle 12 ein Kleber aufgetragen wird, sodass sich die Schnittstelle 12 materialschlüssig mit der Aussparung 13 verbindet.

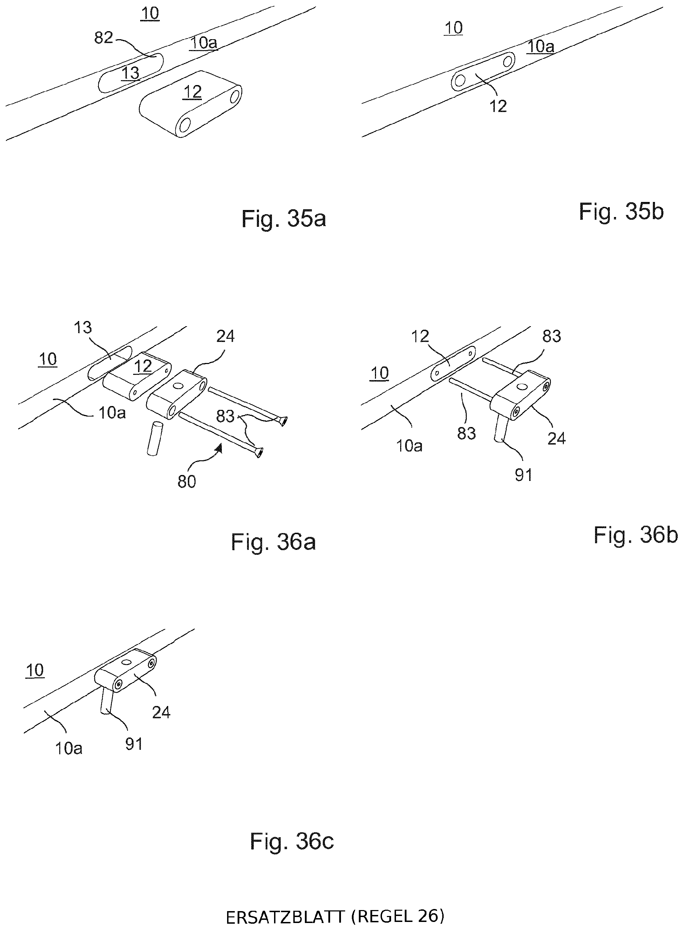

Fig. 35a, 35b zeigen eine weitere Drehsicherung 80 gegen ein Verdrehen der Schnittstelle gegenüber der Tragstruktur 10. Die Aussparung ist in diesem Fall durch ein an seinen Enden ausgerundetes Langloch gebildet. Die Schnittstelle 12 weist eine dazu kongruente Form auf, sodass nach Einführen der Schnittstelle 12 in die Aussparung 13 eine formschlüssige Verbindung 82 zwischen Schnittstelle 12 und Tragstruktur erzeugbar ist.

Fig. 36a, 36b zeigen zunächst in Fig. 36a die Anbringung der Schnittstelle 12 in formschlüssiger Verbindung in der Aussparung 13. An der in Fig. 36b in der Tragstruktur 10 formschlüssig aufgenommenen Schnittstelle 12 kann ein entsprechendes Gegenstück 24 befestigt werden, das im Ausführungsbeispiel ein Anschlussmittel 91 zum Beispiel zum Anschluss eines Stellelements 14 aufweist. Erkennbar sind als Sicherung 84 gegen unbeabsichtigtes Lösen sowohl der Schnittstelle von der Tragstruktur als auch des Gegenstücks 24 von der Schnittstelle 12 Schrauben 83 vorgesehen. Sollen diese Schrauben nur als eine Sicherung 94 gegen unbeabsichtigtes Lösen von der Schnittstelle 12 eingesetzt werden, enden sie in der Schnittstelle 12. Soll durch diese Schrauben eine zusätzliche Absicherung der Schnittstelle 12 in der Aussparung 13 erfolgen, erstrecken sich die Schrauben 83 bis in die Tragstruktur 10. Fig. 36c zeigt die an der Tragstruktur 10 in der Schnittstelle 12 angeordnete Einheit aus Gegenstück 24 und Anschlussmittel 91.

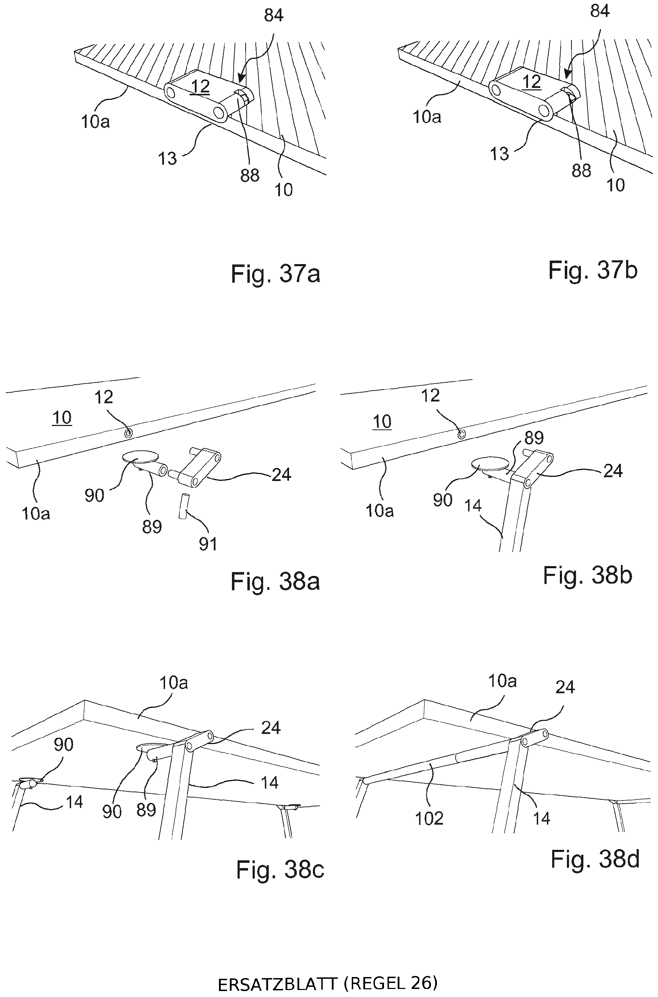

Fig. 37a und 37b zeigen eine Ausgestaltung einer Sicherung 84 der Schnittstelle 12 gegen unbeabsichtigtes Lösen von der Tragstruktur 10, die durch ein manuell betätigbaren Eingriffselement 88 gebildet ist. Es handelt sich um einen Exzentereinsatz, der an der Schnittstelle 12 befestigt ist. Nach Einbringen der Schnittstelle 12 in die Aussparung 13 befindet sich das manuell betätigbare Eingriffselement 88 in der Stellung gemäß Fig. 37a. Wird nun das Eingriffselement 88 betätigt, gelangt es in die Stellung gemäß Fig. 37b, wodurch eine Sicherung gegen unbeabsichtigtes Lösen bzw. Herausziehen aus der Tragstruktur 10 gewährleistet wird.

Bei den Fig. 35a bis 37b weist die Schnittstelle 12 zudem mehrere Anbindungspunkte zur Anbindung des Gegenstücks nebeneinander auf, so dass die im Gebrauchszustand des Möbels anfallenden Kräfte zuverlässig von Tragkörper 10 auf das Gegenstück 14 übertragen werden können. Dazu ist es auch möglich, dass ein Gegenstück 24 oder Stellelement 14 oder Zubehörteil an mehreren Schnittstellen 12 angeschlossen wird.

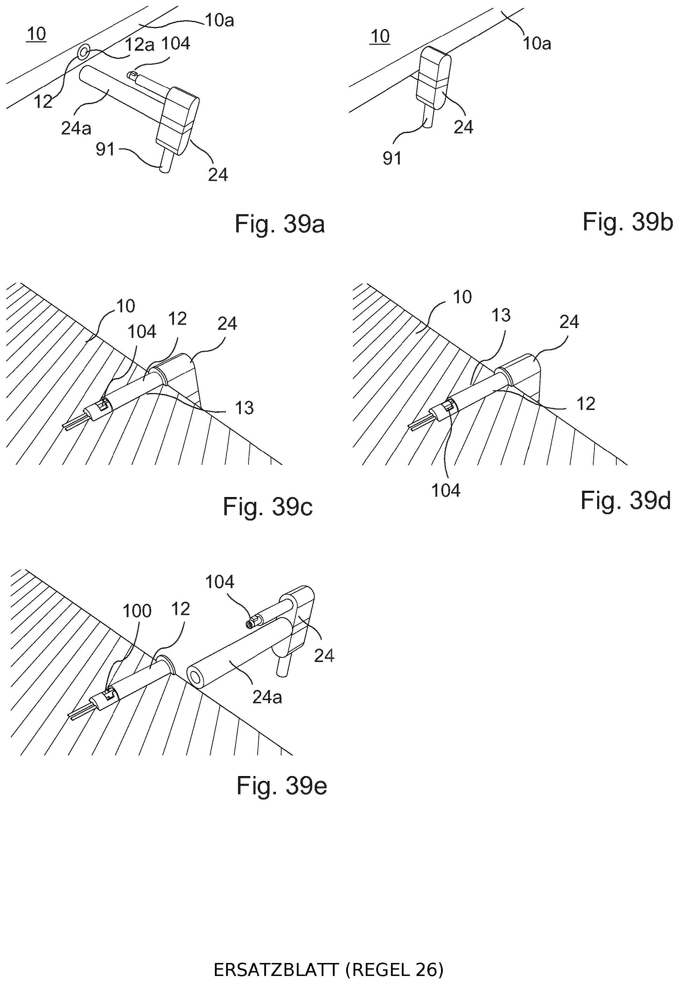

Fig. 38a bis 38c zeigen eine Ausgestaltung, die erforderlich ist, wenn die auf einem Untergrund abgestellte Tragstruktur überbestimmt ist, da dann eine Niveauregulierung 90 von Vorteil ist. Im Ausführungsbeispiel ist die Schnittstelle 12 durch eine zylindrische Aufnahme gebildet, in die als Gegenstück 24 eine zylindrische Hülse eingeführt wird. Diese kann dort auf eine vorgenannte Art und Weise gesichert werden. Am Stellelement 14 ist ein Lagerelement 89 vorgesehen, an dem eine Niveauregulierung 90 höhenverstellbar gelagert ist. Im an der Tragstruktur 10 angeordneten Zustand ergibt sich eine Darstellung gemäß Fig.38c, in der durch Drehen der Niveauregulierung 90 eine Ausrichtung der Tragstruktur 10 erfolgen kann. Die Niveauregulierung 90 ist an wenigstens einem Stellelement 14 vorgesehen, in Fig. 39c ist sie an allen Stellelementen 14 angebracht. Durch die Niveauregulierung kann die Tragstruktur 10 bedarfsweise parallel zum Untergrund bzw. Boden ausgerichtet bzw. waagrecht ins Wasser gestellt werden, um z.B. Fertigungstoleranzen auszugleichen.

Um eine Drehsicherung der Gegenstücke 24 zu erreichen, können auch gemäß Fig. 38d mehrere Gegenstücke 24 über ein Verbindungselement 102 miteinander verbunden werden. In Fig. 38d sind diese Gegenstücke 24 diametral einander gegenüberliegend angeordnet und zur Befestigung eines Stellelements 14 vorgesehen. Die Gegenstücke 24 sind so gegen ein Lösen aus der Tragstruktur 10 gesichert. Zudem kann das Verbindungselement 102 zur Abstützung der Tragstruktur 10 genutzt werden.

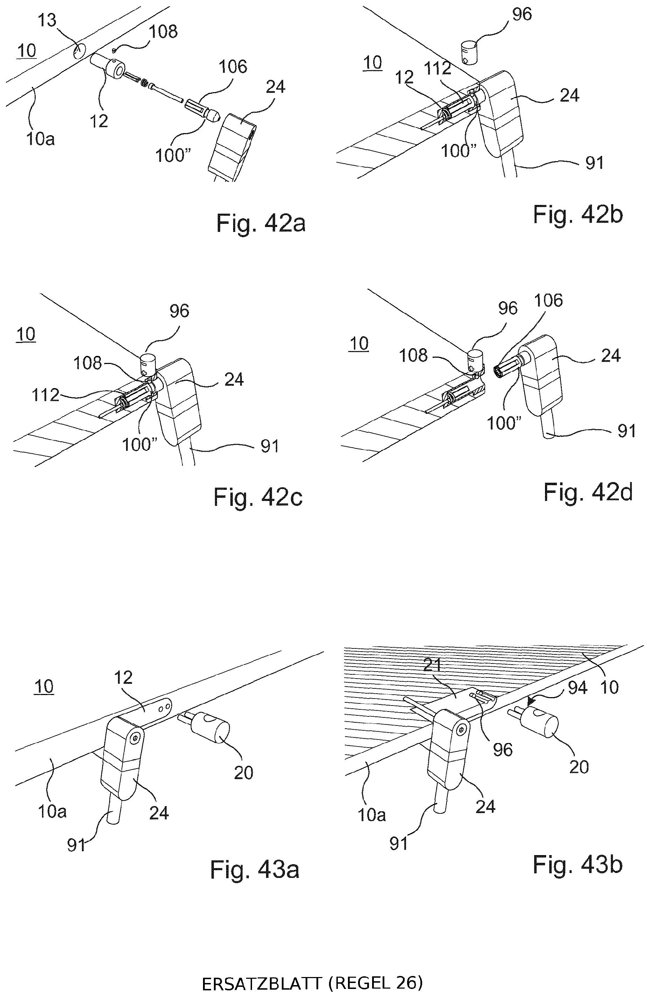

Bei der Darstellung der Fig.38a - 38d, aber auch bei den Fig.39a - 39 e sowie den Fig.43a, 43b ergibt sich als Drehsicherung auch ein Widerlager, da die Komponenten ab einer bestimmten Drehung des Stellelements 14 relativ zur Tragstruktur 10 an der Tischplatte unten anliegen und auf diese Weise ein weiteres Verdrehen in diese eine Richtung verhindert, bzw. in die andere Richtung, wenn das gegenüberliegende Gegenstück z.B. in die andere Richtung gedreht wird (linkes und rechtes Stellelement 14). Zudem besteht grundsätzlich die Möglichkeit in zeichnerisch nicht dargestellter Weise ein Gegenstück mit z.B. einer Zusatzschnittstelle 20 für Zubehör oder auch ein Gegenstück 24 mit Zusatzschnittstelle 20 für Zubehör und ein Stellelement in beiden Richtungen gegen Drehen zu sichern, indem es z.B. flächig zur Abstützung in beiden Richtungen an der Unterseite der Tischplatte, also der Tragstruktur 10 anliegt.

Fig. 39a - 39e zeigen in einem weiteren Ausführungsbeispiel eine Sicherung des Gegenstücks 24 an der Schnittstelle 12 mittels eines Hinterschnitts 100. Gemäß Fig. 39a ist die Schnittstelle 12 äußerlich durch eine zylindrische Aufnahme gebildet, die in der Aussparung der Tragstruktur 10 aufgenommen ist. Gemäß Fig. 39c bis 39e handelt es sich dabei um eine mit zwei Elementen 80 zur Drehsicherung in der Tragstruktur fixierte Hülse, die aber zugleich auch ein Verriegelungselement 104 aufnimmt. Das Verriegelungselement 104 weist dazu eine Öffnung auf, in die ein Hinterschnitt 100 vergleichbar einem Schlüsselbart in einer Stellung eintauchen kann und in der anderen Stellung verriegelt wird. Wird das Gegenstück 24 aus der Position gemäß Fig. 39a in die an der Tragstruktur 10 montierte Stellung gemäß Fig. 39b überführt, taucht der Hinterschnitt 100 in die Öffnung 12a der Schnittstelle 12 ein. Gleichzeitig weist das Gegenstück 24 ein Anlageelement 24a auf, das unter den Tragkörper 10 geführt ist. Durch ein Verklemmen mit der Tragstruktur 10 mit dem Anlageelement 24a kann zunächst eine Positionierung des Stellelements erfolgen. In der so gebildeten Position wird der Hinterschnitt 100 in die verriegelte Stellung gedreht, in der er in Eingriff mit dem Verriegelungselement 104 gelangt, sodass sich die Stellung gemäß Fig. 39c ergibt. Nach unten ist die Tragstruktur 10 durch das Klemmen zwischen Auflageelement 24a sowie den Eingriff des Gegenstücks 24 in die Schnittstelle gesichert. Nach oben erfolgt die Sicherung über das Widerlager und gegen ein unbeabsichtigtes Lösen durch den Hinterschnitt 100.

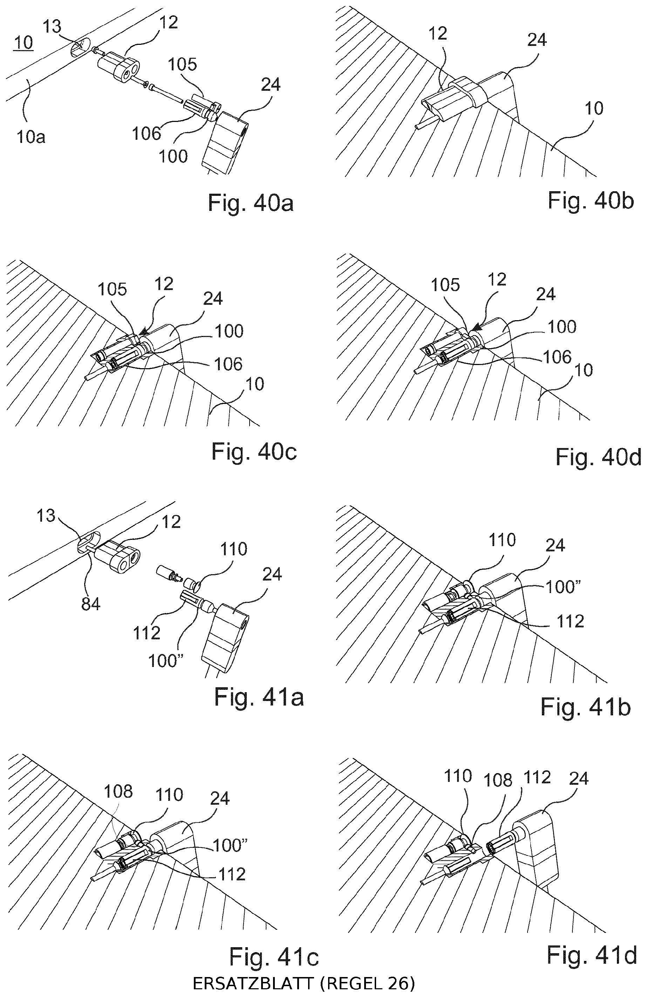

Bei einer Ausgestaltung gemäß Fig. 40a - 40d wird ebenfalls mit einem Hinterschnitt 100' gearbeitet, allerdings wird hier durch einen Drehriegel 105 verriegelt. Zunächst ist die Schnittstelle 12 in einer Aussparung 13 der Tragstruktur 10 aufgenommen. Die Schnittstelle weist zwei Öffnungen auf, wobei in der einen Öffnung gemäß Fig. 40a das Gegenstück 24 fixiert wird. Im Ausführungsbeispiel handelt es sich dabei um einen Bolzen, der am Gegenstück 24 mit einer Schraube fixiert ist. In der zweiten Öffnung wird der Drehriegel 105 gelagert, der je nach Stellung in einen Hinterschnitt 100' eines Verriegelungsbolzen 106 eingreift, sodass dieser zusammen mit dem Gegenstück 24 an der Schnittstelle 12 gemäß Fig. 40d verriegelt werden kann. In der Stellung gemäß Fig. 40c liegt hingegen noch keine Verriegelung vor, da der Drehriegel 105 noch nicht in den Hinterschnitt 100 eingreift. Zur Verriegelung kann das Abdeckelement des Drehriegels 105 der zweiten Öffnung und damit der Drehriegel 105 in seiner Längsrichtung rotiert werden, wobei der Drehriegel 105 dadurch in Eingriff mit dem Hinterschnitt 100' gelangt.

Fig. 41a - 41d zeigen eine Lösung, bei der ein Verriegelungselement 108 mit einer Drucktaste 110 so betätigt wird, dass es in und außer Eingriff mit einem Hinterschnitt 100" gelangt. Gemäß Fig. 41a ist die Schnittstelle 12 mittels einer Sicherung 84 an der Tragstruktur 10 befestigt. Sie hat zudem eine Form, die kongruent zu der langlochartigen Ausgestaltung der Aussparung 13 ist. Erkennbar ist ferner die Drucktaste 110, die federbelastet in der rechten Öffnung der Schnittstelle 12 montiert wird. Das Gegenstück 24 weist gemäß Fig. 41a ein entsprechendes Anschlusselement 112 auf, das in die linke Öffnung der Schnittstelle eingeführt wird und den Hinterschnitt 100" aufweist. Im montierten Zustand gemäß Fig. 41b ist die Drucktaste 110 etwa bündig mit der Kante der Tragstruktur 10. Wird die Drucktaste 110 gemäß Fig. 41c in die Tragstruktur 10 gedrückt, ergibt sich ein Freiraum, in den das Verriegelungselement 108 eintauchen kann, sodass die Bohrung, in der sich das Anschlusselement 112 befindet, frei gesetzt wird und das Gegenstück 24 aus der Bohrung gemäß Fig. 41d herausgezogen werden kann. Wird die Drucktaste 110 losgelassen, gelangt das Verriegelungselement 108 wieder in die Bohrung, wird jedoch bei der nächsten Fixierung eines Gegenstücks durch die Axialbewegung des Anschlusselements 112 verdrängt.

Fig. 42a - 42d zeigen ein alternatives Ausführungsbeispiel zur Festlegung und Sicherung des Gegenstücks 24 gegen ein unbeabsichtigtes Lösen von der Schnittstelle 12 mittels magnetischer Kräfte. Gemäß Fig. 42a ist eine zylindrische Aussparung 13 in der Tragstruktur 10 vorgesehen, in die die Schnittstelle 12 eingebracht wird. Die Schnittstelle 12 weist eine Bohrung auf, in der ein Verriegelungselement 108 quer zur Bohrung beweglich gelagert wird. Im montierten Zustand gemäß Fig. 42b befindet sich in der Schnittstelle 12 das mit einem Hinterschnitt 100" versehene Anschlusselement 112, mit dem das Gegenstück 24 an der Schnittstelle 12 festlegbar ist. Das Gegenstück 24 weist wie in den vorausgegangenen Ausführungsbeispielen ein Anschlussmittel zum Beispiel für ein Stellelement 14 auf. In dieser montierten Stellung kann ein Magnet 96 an die Oberseite der Tragstruktur 10 herangeführt werden, sodass das Verriegelungselement 108 aus dem Hinterschnitt 100" heraus bewegt werden kann, sodass die Bohrung, in der sich das Anschlusselement 112 befindet, freigegeben wird und das Gegenstück 24 gemäß Fig. 42d von der Tragstruktur 10 abgenommen werden kann.

Fig. 43a, 43b zeigen eine Ausgestaltung bei der in diesem Fall eine Zusatzschnittstelle 20 kraftschlüssig durch magnetische Kräfte am Tragkörper 10 gehalten wird. Eine vergleichbare Anordnung ist auch zur Sicherung des Gegenstücks 24 an einer Schnittstelle 12 oder zur Festlegung einer Schnittstelle 12 am Tragkörper 10 möglich. In diesem Fall befinden sich in den in Fig. 43b im Schnitt erkennbaren Bohrungen 114 angeordnete, vorzugsweise eingepresste Magnete 96', sodass bei einem Einführen der Zusatzschnittstelle 20 in die Bohrungen diese dort kraftschlüssig gehalten wird und nur durch Überwindung der Magnetkräfte wieder gelöst werden kann.

In zeichnerisch nicht dargestellter Weise ist es auch möglich, zum Beispiel ein durch magnetische Kräfte an der Tragstruktur 10 gesichertes Stellelement 14 durch Magnetkräfte zu befestigen und zugleich leicht lösbar zu gestalten. Wird eine Magnetsicherung in einer bestimmten Winkelstellung der Magnete zwischen Gegenstück 24 und Schnittstelle 12 erzeugt, können durch ein Drehen von Gegenstück 24 bzw. Stellelement 14 die magnetischen Kräfte leicht aufgehoben werden, sodass das Stellelement 14 von der Tragstruktur 10 zu lösen ist.

### Bezugszeichenliste

| | | | |
|---|---|---|---|
| 10 | Tragstruktur | 66 | Rückwand |
| 10a, 10b | Kante | 68 | Schrank |
| 12 | Schnittstelle | 70 | Trennwand |
| 12a | Öffnung | 72 | Kabelkanal |
| 13 | Aussparung | 74 | CPU-Halter |
| 14, 14', 14" | Stellelement | 80 | Drehsicherung |
| 16, 18 | Plattenförmiges Element | 82 | Formschlussverbindung |
| 20 | Zusatzschnittstelle | 83 | Schraube |
| 22 | Koppelelement | 84 | Sicherung gegen Lösen |
| 24 | Gegenstück | 85 | Kleber |
| 24a | Anlageelement | 86 | Anformungen |
| 26 | Leuchte | 88 | Eingriffselement |
| 28 | Anschlusselement | 89 | Lagerelement |
| 30 | Statikelement | 90 | Niveauregulierung |
| 32 | Seil | 91 | Anschlussmittel |
| 34 | Halter | 92 | Drehsicherung |
| 36 | Telefon | 93 | Bohrung |
| 38 | Monitor | 94 | Sicherung gegen Lösen |
| 40 | Halter für 38 | 96, 96' | Magnet |
| 42 | Papierkorb | 98 | Sicherungselement |
| 43 | Rahmenelementen | 100,100',100" | Hinterschnitt |
| 44 | Aussteifung | 102 | Verbindungselement |
| 46 | Hubsäule | 104 | Verriegelungselement |
| 48 | höhenverstellbares Bein | 105 | Drehriegel |
| 50, 52, 54 | Haltepunkte | 106 | Verriegelungsbolzen |
| 56 | Schiene | 108 | Verriegelungselement |
| 58 | Rückenlehne | 110 | Drucktaste |
| 60 | Kopfteil | 112 | Anschlusselement |
| 62 | Armlehne | 114 | Bohrung |
| 64 | Seitenwand | | |

## Patentansprüche

1. System zum Aufbau eines Möbels oder eines Messestands mit
- einer durch ein plattenförmiges Element (16) gebildeten Tragstruktur (10), die eine Kontur aufweist und flächig ausgebildet ist oder eine Fläche zumindest teilweise umgibt, mit mehreren seitlichen Kanten (10a, 10b), wobei an wenigstens zwei vorzugsweise gegenüberliegenden Kanten (10a, 10b) Schnittstellen (12) vorgesehen sind, die zur Verbindung mit weiteren Systemkomponenten eingerichtet sind und die nur seitlich in den seitlichen Kanten (10a, 10b) vorgesehen sind,
- mehreren Stellelementen (14, 14', 14"), die an den an den Kanten (10a, 10b) angeordneten Schnittstellen (12) der wenigstens einen Tragstruktur (10) form- und/oder kraftschlüssig lösbar befestigt sind und die Tragstruktur (10) nach unten in Richtung Boden abstützen,
- wobei die in den Kanten (10a, 10b) der Tragstruktur (10) angeordneten und von der Tragstruktur gesonderten Schnittstellen (12) in die Tragstruktur (10) zumindest teilweise integriert und in Aussparungen (13) angeordnet sind, die in den seitlichen Kanten (10a, 10b) vorgesehen sind, und wobei die Stellelemente (14, 14', 14") mit einem Gegenstück (24) zur jeweiligen Schnittstelle (12) an den Schnittstellen (12) festlegbar sind,
- wobei die durch das plattenförmige Element (16) gebildete Tragstruktur nur seitlich zum Anschluss der Stellelemente (14, 14', 14") an den Schnittstellen (12) ausgestaltet ist, während die Tragstruktur selbst an den anderen Oberflächen unangetastet, beidseitig verwendbar ist und wendbar ist,
- wobei die Form der Fläche als auch deren Kontur so ausgestaltet ist, dass an den die Fläche begrenzenden seitlichen Kanten (10a, 10b) die Schnittstellen (12) in den Aussparungen (13) vorgesehen sind, und
**dadurch gekennzeichnet,**
**dass** die Schnittstellen (12) in die Tragstruktur vollständig in den Aussparungen (13) integriert sind,
**dass** die Aussparungen (13) zylindrisch oder langlochartig ausgebildet sind und/oder die Schnittstelle (12) eine zur Aussparung (13) kongruente Form aufweist und dazu eingerichtet ist, nach Einführen der Schnittstelle (12) in die Aussparung (13) eine formschlüssige Verbindung zwischen Schnittstelle (12) und Tragstruktur zu erzeugen, und
**dass** das Gegenstück (24) gegen Verdrehen des Gegenstücks gegenüber der Schnittstelle (12) drehsicher befestigbar ist und eine Sicherung (94) gegen ein unbeabsichtigtes Lösen des Gegenstücks von der Schnittstelle (12) aufweist, die durch wenigstens eines der folgenden Merkmale gebildet ist:
- kraft- und formschlüssige Verbindung des Gegenstücks (24) mit der Schnittstelle (12),
- kraftschlüssige Verbindung des Gegenstücks (24) mit der Schnittstelle (12) mittels magnetischer Kräfte,
- Eingreifen eines Sicherungselements in einen Hinterschnitt,
- Verbindung mehrerer Gegenstücke (24) miteinander.

2. System nach Anspruch 1, **dadurch gekennzeichnet, dass** die Schnittstelle (12) ein zumindest teilweise in der Aussparung (13) angeordneter Einsatz ist.

3. System nach Anspruch 1 oder 2, **gekennzeichnet durch** wenigstens eines der Merkmale, dass
- das wenigstens eine Stellelement (14, 14', 14") ein Bein zum Aufstellen ist,
- das wenigstens eine Stellelement (14, 14', 14") zur Höhenverstellung der wenigstens einen Tragstruktur (10) vorgesehen oder eine Hubsäule (46) ist,
- an wenigstens einem Stellelement eine zwischen Stellelement (14) und Tragstruktur (10) angreifende Niveauregulierung zum Ausrichten der Tragstruktur (10) vorgesehen ist.

4. System nach einem der vorhergehenden Ansprüche, **dadurch gekennzeichnet, dass** das wenigstens eine Stellelement (14) dazu eingerichtet ist, wenigstens eine der folgenden weiteren Systemkomponente zu befestigen: eine Sitzfläche, eine Liegefläche, eine Abstellfläche, eine Anlehnfläche, ein Kopfteil (60), eine Armlehne (62), eine Rückenlehne (58).

5. System nach einem der vorhergehenden Ansprüche, **dadurch gekennzeichnet, dass** an den Schnittstellen (12) zur Befestigung der Stellelemente (14, 14', 14") und/oder an zusätzlichen an den Kanten (10a, 10b) der wenigstens einen Tragstruktur (10) vorgesehenen Zusatzschnittstellen (20) Zubehörelemente befestigt sind.

6. System nach Anspruch 5, **dadurch gekennzeichnet, dass** die Zubehörelemente an den an den Schnittstellen (12) angebrachten Stellelementen (14, 14', 14") befestigt sind, wobei vorzugsweise mehrere Schnittstellen in einem Einsatz zusammengefasst und bedarfsweise unterschiedlich ausgeführt sind.

7. System nach einem der vorhergehenden Ansprüche, **dadurch gekennzeichnet, dass** an den Schnittstellen (12) Koppelelemente (22) zur Ankopplung an Schnittstellen weiterer Tragstrukturen (10) befestigbar sind, wobei vorzugsweise am Koppelelement (22) zugleich ein Stellelement (14') vorgesehen ist, und/oder das wenigstens eine Stellelement (14, 14', 14") mit einem als Gegenstück (24) ausgebildeten, zur Schnittstelle (12) gegengleichen Element festlegbar ist.

8. System nach einem der vorhergehenden Ansprüche, **dadurch gekennzeichnet, dass** die Schnittstelle (12) eine Drehsicherung (80) gegen Verdrehen der Schnittstelle (12) gegenüber der Tragstruktur (10) aufweist, die durch wenigstens eines der folgenden Merkmale gebildet ist:
- hinsichtlich der Aussparung (13) exzentrische Anordnung eines Elements zur Drehsicherung (80),
- Anordnung mehrerer Elemente zur Drehsicherung(80),
- Erzeugung einer formschlüssigen, nicht drehbaren Verbindung (82) zwischen Schnittstelle (12) und Tragstruktur (10),

9. System nach einem der vorhergehenden Ansprüche, **dadurch gekennzeichnet, dass** die Schnittstelle (12) eine Sicherung (84) gegen ein unbeabsichtigtes Lösen von der Tragstruktur (10) aufweist, die durch wenigstens eines der folgenden Merkmale gebildet ist:
- mechanisches Verbinden oder Verschrauben der Schnittstelle (12) mit der Trag-struktur (10),
- materialschlüssiges Verbinden der Schnittstelle (12) mit der Tragstruktur (10),
- passives Verklemmen der Schnittstelle (12) mit der Tragstruktur (10) durch Anformungen (86),
- aktives Verklemmen der Schnittstelle (12) mit der Tragstruktur (10) durch manuell betätigbare Eingriffselemente (88).

10. System nach einem der vorhergehenden Ansprüche, **dadurch gekennzeichnet, dass** die Drehsicherung (92) gegen Verdrehen des Gegenstücks (24) gegenüber der Schnittstelle (12) durch wenigstens eines der folgenden Merkmale gebildet ist:
- gegenüber der Schnittstelle (12) exzentrische Anordnung eines formschlüssigen Elements zur Drehsicherung (92),
- Anordnung mehrerer Elemente zur Drehsicherung (92),
- Verwendung eines Widerlagers.

## Claims

1. System for constructing a piece of furniture or an exhibition stand comprising
- a supporting structure (10) formed by a plate-shaped element (16) comprising a contour and comprising a surface or at least partially surrounding a surface, with several side edges (10a, 10b), wherein interfaces (12) are provided on at least two preferably opposite edges (10a, 10b), which are configured for connection to further system components and which are provided only laterally in the side edges (10a, 10b),
- a plurality of positioning elements (14, 14', 14") which are releasably secured to the interfaces (12) of the at least one support structure (10) arranged at the edges (10a, 10b) in a positive-locking and/or force-locking manner and which support the support structure (10) downwards towards the floor,
- wherein the interfaces (12) arranged in the edges (10a, 10b) of the support structure (10) and separated from the support structure are at least partially integrated into the support structure (10) and arranged in recesses (13) provided in the side edges (10a, 10b), and wherein the positioning elements (14, 14', 14") can be fixed at the interfaces (12) with a mating part (24) for the respective interface (12),
- wherein the supporting structure formed by the plate-shaped element (16) is configured only laterally for connecting the positioning elements (14, 14', 14") at the interfaces (12), while the supporting structure itself is untouched on other surfaces thereof, is usable on both sides and is reversible,
- wherein the shape of the surface and its contour are configured such that the interfaces (12) are provided in the recesses (13) at the side edges (10a, 10b) delimiting the surface, and
**characterised in**
**that** the interfaces (12) in the support structure are completely integrated into the recesses (13),
**that** the recesses (13) are cylindrical or elongated and/or the interface (12) has a shape that is congruent with the recess (13) and is configured to create a positive locking connection between the interface (12) and the supporting structure after the interface (12) has been inserted into the recess (13) , and
**that** the mating part (24) can be secured against rotation relative to the interface (12) and comprises a securing device (94) to prevent unintentional release of the mating part from the interface (12), which is formed by at least one of the following features:
- a positive-locking and force-locking connection of the mating part (24) to the interface (12),
- a force-locking connection of the mating part (24) to the interface (12) by means of magnetic forces,
- engagement of a securing element in an undercut,
- connection of several mating parts (24) to each other.

2. System according to claim 1, **characterised in that** the interface (12) is an insert arranged at least partially in the recess (13).

3. System according to claim 1 or 2, **characterised by** at least one of the features that
- the at least one positioning element (14, 14', 14") is a leg for setting up,
- the at least one positioning element (14, 14', 14") is provided for height adjustment of the at least one support structure (10) or is a lifting column (46),
- at least one positioning element comprises a level control engaging between the positioning element (14) and the supporting structure (10) for aligning the supporting structure (10).

4. System according to anyone of the preceding claims, **characterised in that** the at least one positioning element (14) is configured to fasten at least one of the following additional system components: a seat surface, a reclining surface, a storage surface, a leaning surface, a headrest (60), an armrest (62), a backrest (58).

5. System according to anyone of the preceding claims, **characterised in that** accessory elements are mounted to the interfaces (12) for mounting the positioning elements (14, 14', 14") and/or at additional interfaces (20) provided at the edges (10a, 10b) of the at least one supporting structure (10).

6. System according to claim 5, **characterised in that** the accessory elements are mounted to the positioning elements (14, 14', 14") attached to the interfaces (12), wherein preferably several interfaces are combined in one insert and are designed differently as required.

7. System according to anyone of the preceding claims, **characterised in that** coupling elements (22) for coupling to interfaces of further support structures (10) are attachable to the interfaces (12), wherein preferably a positioning element (14') is provided at the same time on the coupling element (22), and/or the at least one positioning element (14, 14', 14") is fixable to an element configured as a mating part (24) to the interface (12) in an opposite configuration.

8. System according to anyone of the preceding claims, **characterised in that** the interface (12) comprises an anti-rotation device (80) to prevent the interface (12) from rotating relative to the support structure (10), which is formed by at least one of the following features:
- eccentric arrangement of an element for the anti-rotation device (80) with respect to the recess (13),
- arrangement of several anti-rotation elements (80),
- creation of a positive-locking, non-rotatable connection (82) between the interface (12) and the support structure (10),

9. System according to anyone of the preceding claims, **characterised in that** the interface (12) comprises a securing device (84) to prevent unintentional detachment from the supporting structure (10), which is formed by at least one of the following features:
- mechanical connection or screwing of the interface (12) to the support structure (10),
- material bonding of the interface (12) to the support structure (10),
- passive clamping of the interface (12) to the supporting structure (10) using integrally formed parts (86),
- active locking of the interface (12) with the supporting structure (10) using manually actuatable engagement elements (88).

10. System according to anyone of the preceding claims, **characterised in that** the anti-rotation device (92) against rotation of the mating part (24) relative to the interface (12) is formed by at least one of the following features:
- eccentric arrangement of a positive-locking element for the anti-rotation device (92) relative to the interface (12),
- arrangement of several elements for the anti-rotation device (92),
- use of an abutment.

## Revendications

1. Système pour monter un meuble ou un stand d'exposition comportant
- une structure porteuse (10) formée par un élément en forme de plaque (16), qui présente un contour et est réalisée sous une forme plane ou entoure au moins partiellement une surface, avec plusieurs arêtes latérales (10a, 10b), des interfaces (12) étant prévues sur au moins deux arêtes de préférence opposées (10a, 10b) et étant configurées pour effectuer une liaison avec d'autre composants du système et étant prévues seulement latéralement dans les arêtes latérales (10a, 10b),
- plusieurs éléments de positionnement (14, 14', 14") qui sont fixés de manière amovible par complémentarité de forme ou adhérence sur les interfaces (12) disposées sur les arêtes (10a, 10b) de la ou des structure(s) porteuse(s) (10) et soutiennent la structure porteuse (10) vers le bas dans la direction du sol,
- les interfaces (12) disposées dans les arêtes (10a, 10b) de la structure porteuse (10) et séparées par la structure porteuse étant intégrées au moins partiellement dans la structure porteuse (10) et disposées dans des évidements (13) qui sont prévus dans les arêtes latérales (10a, 10b), et les éléments de positionnement (14, 14', 14") pouvant être fixés aux interfaces (12) avec une contre-pièce (24) sur l'interface respective (12),
- la structure porteuse formée par l'élément en forme de plaque (16) étant réalisée seulement latéralement en prolongation des éléments de positionnement (14, 14', 14") au niveau des interfaces (12), tandis que la structure porteuse est elle-même intacte au niveau des autres surfaces, utilisable des deux côtés et réversible,
- la forme de la surface ainsi que ses contours étant également réalisés de telle manière qu'au niveau des arêtes latérales (10a, 10b) délimitant la surface, les interfaces (12) soient prévues dans les évidements (13),
**caractérisé en ce que**
les interfaces (12) sont complètement intégrées dans la structure porteuse dans les évidements (13), **en ce que** les évidements (13) sont réalisés sous forme cylindrique et oblongue et/ou les interfaces (12) présentent une forme congruente avec l'évidement (13) et qui est configurée pour produire, après introduction de l'interface (12) dans l'évidement (13), une liaison par complémentarité de forme entre l'interface (12) et la structure porteuse, et
**en ce que** la contre-pièce (24) peut être fixée d'une manière anti-rotative, contre la rotation de la contre-pièce par rapport à l'interface (12) et comporte une sécurisation (94) vis-à-vis d'un détachement non intentionnel de la contre-pièce de l'interface (12), laquelle est formée de l'une au moins des caractéristiques suivantes :
- une liaison par adhérence et complémentarité de forme de la contre-pièce (24) à l'interface (12),
- une liaison par adhérence de la contre-pièce (24) à l'interface (12) au moyen de forces magnétiques,
- une pénétration d'un élément de sécurité dans une contre-dépouille,
- une liaison de plusieurs contre-pièces (24) ensemble.

2. Système selon la revendication 1, **caractérisé en ce que** l'interface (12) est un insert disposé au moins partiellement dans l'évidement (13).

3. Système selon la revendication 1 ou 2, **caractérisé par** au moins l'une des caractéristiques suivantes :
- le ou les élément(s) de positionnement (14, 14', 14") est(sont) un(des) pied(s) d'appui,
- le ou les élément(s) de positionnement (14, 14', 14") est(sont) prévu(s) pour le réglage en hauteur de la ou des structure(s) porteuse(s) (10) ou est une colonne de levage (46),
- au niveau d'au moins un élément de positionnement est prévu un réglage de niveau agissant entre l'élément de positionnement (14) et la structure porteuse (10) pour l'alignement de la structure porteuse (10).

4. Système selon l'une des revendications précédentes, **caractérisé en ce que** le ou les éléments de positionnement (14) est/sont configuré(s) pour fixer au moins l'un des autres composants du système suivants : une surface pour s'asseoir, une surface pour se coucher, une surface de repos, une surface d'appui, un appui-tête (60), un accoudoir (62), un dossier (58).

5. Système selon l'une des revendications précédentes, **caractérisé en ce que** des accessoires sont fixés au niveau des interfaces (12) pour la fixation des éléments de positionnement (14, 14', 14") et/ou au niveau d'interfaces supplémentaires (20) prévues au niveau des arrêtes (10a, 10b) de la ou des structure(s) porteuse(s) (10).

6. Système selon la revendication 5, **caractérisé en ce que** les accessoires sont fixés aux éléments de positionnement (14, 14', 14") appliqués au niveau des interfaces (12), plusieurs interfaces étant de préférence réalisées de manière regroupée dans un insert et au besoin différemment.

7. Système selon l'une des revendications précédentes, **caractérisé en ce qu'**au niveau des interfaces (12), des éléments de couplage (22) peuvent être fixés pour le couplage au niveau des interfaces d'autres structures porteuses (10), un élément de positionnement (14') étant de préférence prévu en même temps au niveau de l'élément de couplage (22) et/ou le ou les élément(s) de positionnement (14, 14', 14") peu(ven)t être fixé(s) avec un élément opposé à l'interface (12) réalisé sous forme de contre-pièce (24).

8. Système selon l'une des revendications précédentes, **caractérisé en ce que** l'interface (12) présente un système anti-rotation (80) pour empêcher la rotation de l'interface (12) par rapport à la structure porteuse (10), qui est formé par au moins l'une des caractéristiques suivantes :
- une mise en place excentrique par rapport à l'évidement (13) d'un élément du système anti-rotation (80),
- une mise en place de plusieurs éléments du système anti-rotation (80),
- une production d'une liaison par complémentarité de forme, non tournante (82) entre l'interface (12) et la structure porteuse (10).

9. Système selon l'une des revendications précédentes, **caractérisé en ce que** l'interface (12) présente une sécurité (84) contre un détachement non intentionnel de la structure porteuse (10), qui formé par l'une au moins des caractéristiques suivantes :
- une liaison mécanique ou un vissage de l'interface (12) à/sur la structure porteuse (10),
- une liaison par complémentarité de matériau de l'interface (12) à la structure porteuse (10),
- un collage passif de l'interface (12) à la structure porteuse (10) par façonnage (86),
- un collage actif de l'interface (12) à la structure porteuse (10) grâce à des éléments d'insertion actionnables manuellement.

10. Système selon l'une des revendications précédentes, **caractérisé en ce que** le dispositif anti-rotation (92) contre la rotation de la contre-pièce (24) par rapport à l'interface (12) est formé par au moins l'une des caractéristiques suivantes :
- une mise en place excentrique par rapport à l'interface (12) d'un élément à complémentarité de forme pour le dispositif anti-rotation (92),
- une mise en place de plusieurs éléments pour le dispositif anti-rotation (92),
- l'utilisation d'une contre-butée.
